(19) Europäisches Patentamt
European Patent Office
Office européen des brevets

(11) Publication number: **0 640 927 A1**

## EUROPEAN PATENT APPLICATION

(21) Application number: **94306279.4**

(22) Date of filing: **25.08.94**

(51) Int. Cl.⁶: **G06F 13/38**, G06F 13/12

(30) Priority: **31.08.93 GB 9318014**

(43) Date of publication of application:
**01.03.95 Bulletin 95/09**

(84) Designated Contracting States:
**DE FR GB IT NL**

(71) Applicant: **TEXAS INSTRUMENTS INCORPORATED**
**13500 North Central Expressway**
**Dallas**
**Texas 75265 (US)**

(84) **DE FR IT NL**

(71) Applicant: **TEXAS INSTRUMENTS LIMITED**

Manton Lane
Bedford MK41 7PA (GB)

(84) **GB**

(72) Inventor: **The designation of the inventor has not yet been filed**

(74) Representative: **Nettleton, John Victor et al**
**Abel & Imray**
**Northumberland House**
**303-306 High Holborn**
**London, WC1V 7LH (GB)**

(54) **Improvements in and relating to local area network adaptors.**

(57) A Local Area Network (LAN) adapter is provided. The adapter includes both a main processor and an auxillary processor. The auxillary processor operates under the control of dedicated hardware in the form of a horizontally microcoded datapath. This allows more than one operation to occur in a single adapter bus cycle, thus speeding up the frame transfer rate whilst not sacrificing other operational parameters. The auxillary processor operates in this manner to take over some of the tasks / operations formerly taken on by the main processor.

Fig. 2

EP 0 640 927 A1

This invention relates to a processor having frame-processing acceleration capabilities for use with, for example, Local Area Network (LAN) Systems,

It is well known to provide Communications Processors integrating complete LAN subsystems and examples of such processors include the TMS 380Cx6 family produced by Texas Instruments Incorporated. The TMS 380Cx6 family provides processors which can provide both Token-Ring and Ethernet Network protocols.

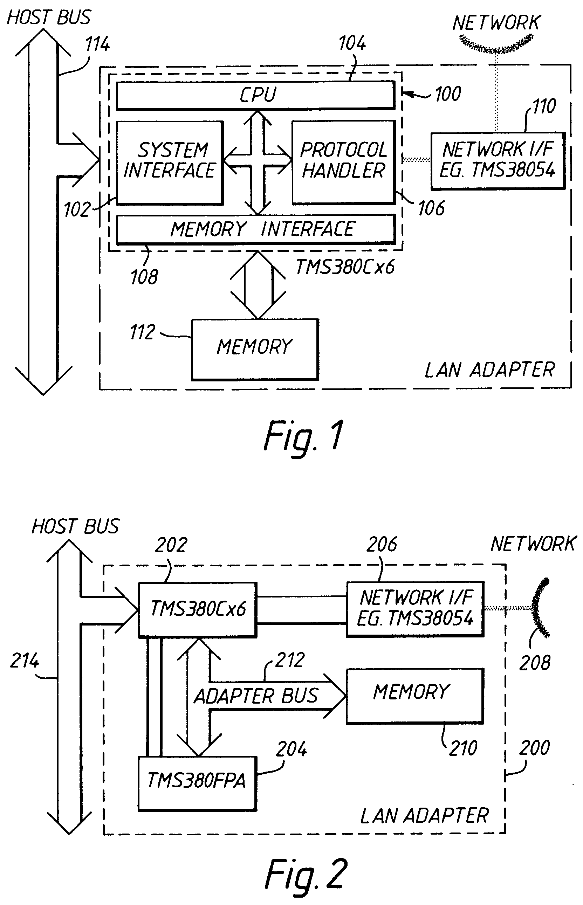

A typical LAN adapter (the TMS 380Cx6) 100 is shown in Figure 1. The LAN adapter includes the following main functional blocks: a host system interface (SIF) 102; a local microprocessor (CPU) 104; a Protocol Handler (PH) 106; and a memory interface (MIF) 108.

The SIF provides an interface for the transfer of data and control information between the adapter 100 and the Host processor. It comprises a direct I/O (DIO) interface, and an intersystem Direct Memory Access (DMA) controller. The DIO is used for the transfer of command and status information, interrupt passing, and system initialization. The DMA controller is used by the LAN adapter CPU for the DMA transfer of data between the host and the adapter.

The PH is the LAN controller responsible for the Media Access Control (MAC) level transmission and reception of frames. It is a list-driven machine that can transmit and receive frames without processor intervention. It has an interface to the PHY level network interface device 110.

The adapter CPU controls the overall LAN adapter. CPU instructions are fetched from the external memory 112 connected to the MIF. In DRAM based systems CPU code is down-loaded from the host (using DIO) at initialization. The CPU is responsible for a number of adapter functions including:

Executing network frame-level MAC and SMT protocols;

Providing a high-level command interface to the host through SIF DMA operations;

Transferring frames between host and adapter;

Managing adapter buffer storage; and

Managing the reception and transmission of network frames.

The MIF provides a glue-less DRAM memory interface to the other adapter functions. The memory interface bus provided by the MIF also supports external bus masters that can access Memory or internal adapter registers.

The diagram also shows the connection of the adapter to the Host bus 114 to local DRAM memory (112) and to the Network interface device 110.

The performance of TMS 380Cx6 adapters is constrained by the management tasks of the CPU, and the complexity of the high-level host interface.

The CPU is directly involved in the transfer of every frame between host and the adapter. Each frame transfer to and from the adapter requires a minimum of three individual DMA transfers by the SIF. As the SIF is a true "dumb" DMA controller the CPU must set-up and verify each individual transfer.

The CPU is also responsible for PH management. Although the PH is far more autonomous than the SIF, the CPU is still responsible for managing the adapter receive queues and adapter buffer resources. In order to meet the requirements of the Token-Ring MAC protocol it must always ensure there is a buffer available for the reception of certain high-priority "Express-buffer" frames. It also has to filter unwanted frames and recycle frame buffers to the receiver.

The execution of MAC and SMT protocols requires little adapter horsepower and has no real impact on performance.

Small packet performance, i.e. the ability to processes individual frames at a high frequency, has become an important industry benchmark for adapter performance. The adapter software overhead of integrated adapters cause them to perform badly in such benchmarks in comparison with simpler Ethernet (IEEE802.3) adapters, where the host CPU directly controls the Ethernet LAN controller.

Improving the small packet performance of integrated adapters can be tackled in a number of ways. Simplifying the host interface; increasing the performance of the local processor; or integrating functions into hardware. However, changes to an existing design are constrained by economic and market forces. The costs and time-to-market of a complete system redesign may be uneconomic, whilst changes in the external interface of the adapter that affect software drivers will cause problems for existing users.

In the case of the TMS380 for example, improvements to the known LAN adapter architectures had just such constraints; namely the need to improve short-frame performance from 6K frame/second to a figure more comensurate with the theoretical limit of 55K frames (16 Mbit/s T.R.).

A traditional approach to this problem would be to increase the device clock rate. This has direct impact on adapter CPU performance, and requires little design changes. However for architectures which are based around direct coupling to low-cost DRAMS, the performance of such devices and the design of local buses is such that only modest (25-50%) performance improvements are available by clock scaling. Use of

2

SRAMS might allow up to a 100% performance improvement, but would be more costly and be reaching the limits of scalability of the bus design. Use of page mode to burst data to and from DRAM could allow higher clock speeds, but is prevented by the single-cycle arbitration requirements of the existing adapter functions.

Given the limits on adapter CPU speed-up, then an alternative is to remove it from the critical path, and implement the critical path operations on a faster piece of hardware. The critical path in achieving high frame throughput is the transport of frames through the adapter to the host and all related per-frame housekeeping work. For example the critical path code for receiving frames in for example the TMS380 adapter consists of code scanning for, filtering, and removing frames from the PHs linked-list buffer structure, and code managing the SIF in order to transfer frames to Rx list structures in the host memory. Fortunately, aside from filtering between MAC and LLC frames, this critical path is independant of the Token-ring MAC protocols. This means that using a different processor for execution of the critical path does not require rewriting MAC protocol code, which can continue to be executed on the local processor.

Analysis of the TMS380 critical path code shows that the code execution time is primarily limited by adapter CPU instruction fetches. About 80% of adapter CPU bus cycles are Instruction fetches. An auxillary processor with a seperate code space would avoid this, freeing bus bandwidth for data operations. Efficient use of this extra bandwidth would cut the critical path execution time to 20% of its current value. However efficient use of this extra bandwidth requires use of either a high-speed auxiliary processor, or dedicated hardware.

A (Digital Signal Processor) DSP core would seem to make an attractive candidate for the auxillary processor. A high enough clock rate, and pipelining of local bus transfers, would ensure that it used every available adapter bus cycle. Its general programmability would provide system flexibility, and allow code development in parallel with hardware. However, it is very much an "Over-kill" solution, being much more costly in silicon area than dedicated hardware. This would limit opportunities for integration onto the TMS380 adapter chip.

Accordingly, one object of the present invention is to provide a means of improving the frame rate of a LAN adapter whilst overcome at least some of the disadvantages of the above mentioned solutions.

According to one aspect of the present invention there is provided a Local Area Network (LAN) adapter for connecting a host system to a Network providing an interface between the network and the host; including a main processor and an auxillary processor including operating means adapted to carry out a number of operations normally performed by the main processor, thereby increasing the frame transfer rate of the adapter.

This has the advantage of relatively high speed frame transfer and overcomes at least some of the disadvantages of the prior art.

Further advantages of prefered features of the invention include the fact that dedicated hardware in the form of a horizontally microcoded datapath, can yield most of the advantages of the DSP approach, whilst avoiding its complexity and cost. Many CISC microprocessors, including the TMS380 adapter CPU, are based on horizontally microcoded datapaths. Microcode in a control ROM is used to control the datapath in the various states of a CISC instruction. The wide instruction word of horizontal microcode is used to control the datapath functions directly. This makes horizontal microcode more powerful than conventional processor instruction sets, as the full potential of the datapath can be used. However, the wide instruction word is very inefficient in terms of storage versus a conventional processor instruction set.

Horizontal microcoding makes a good fit with the requirements of the auxillary processor. The object of the auxillary processor is to use every adapter bus cycle. If the datapath has sufficient parallel functions to allow all internal operations to be carried out in parallel with adapter bus cycles, then the datapath need only execute at bus cycle rate. This has the twin advantages of reducing the performance requirements of the datapath, and reducing the amount of microcode storage required.

The auxillary processor does not need to execute a lot of code, the object of the exercise is after all to reduce the execution time of the critical path. So coding inefficiency is not such a problem.

According to a second aspect of the present invention there is provided an auxillary processor for use in a Local Area Network (LAN) adapter, which adapter provides an interface between a network and a host and includes a main processor, wherein the auxillary processor includes operating means adapted to carry out a number of operations normally performed by the main processor, thereby increasing the frame transfer rate of the adapter; further comprising a microcontroller having a horizontally microcoded datapath with a control store means adapted to store customisable microcode for operating predetermined applications, in use.

The auxillary processor for an adapter that is based on a horizontally microcoded datapath is provided. It stores microcode in SRAM rather than ROM which gives flexibility in code development, whilst not precluding later ROM based devices, or ROM based integration onto the adapter chip.

The auxillary processor is responsible for all frame transfers between the host and the network. In order to do this, it must manage adapter hardware: the PH (LAN controller), and SIF (Host DMA controller); and control the allocation of frame buffers in adapter memory. It also needs to provide services to the local processor to allow it to send and receive MAC frames. Additionally, it must do all of this in a manner consistent with the existing host software interface.

The PH is an intelligent LAN controller that sends and receives frames autonomously through linked-lists of frame buffers. In order to manage the PH the auxillary processor (FPA) needs to manipulate these lists and the data they contain. The SIF, in comparison, is a dumb peripheral. SIF DMA operations must be set up one at a time, by writing to the SIFs control registers. Both peripherals require the FPA to make many local bus transfers, and it is the number of these transfers that sets a limit on FPA performance (Cacheing is of little use as adapter data as the frame buffers change dynamically as frames as sent and received). This limitation was a key influence in the design of the FPA. It means that the internal processing speed of the FPA is less important than its ability to efficiently use adapter bus cycles, and use the minimum of them.

Hardware state machines that snoop frame information as it is transferred on the local data bus are used to improve FPA performance by reducing the number of memory accesses needed to collect information. This technique is especially useful for managing received frames. Maximum throughput of a IEEE802.5 token ring is approximately 55K frames/second, prefiltering frames in hardware can substantially improve performance under such a high loading. Current adapters under such a load are so busy filtering (i.e. throwing away) frames that very few frames get to the host.

Collection of network statistics also benefit from bus snooping. Normally it is the TMS380 processor which collects statistics. This places a considerable burden on receive frame processing. However, the FPA snoops the relevant information and counts relevant events in its statistics registers.

Another important aspect of the FPA design is managing concurrent operations. The command block host interface, the store and forward architecture, and the full duplex nature of Token ring mean that the FPA manage a number of tasks concurrently. Scheduling and task context switching time is an important contributer to frame processing time if implemented as software (microcode), so the FPA implements these functions in hardware.

Network operations that manage the protocol handler take highest priority (with Rx before Tx), followed by CPU "commands" and lastly SIF operations. The SIF host interface scheme requires three virtual channels: Frame Rx, Frame transmit and command/status transfers. These three SIF channels are implemented as three microcode subtasks, scheduled on a non-preemptive round-robin system by hardware. This ensure fair processing bandwidth allocation between receive and transmit, preventing either channel "hogging" the DMA functions. For instance, it allows the host to transmit frames under extreme receive congestion.

Reference will now be made, by way of example, to the accompanying drawings, in which:

Figure 1 is a block diagram of a prior art LAN adapter;

Figure 2 is a block diagram of a LAN adapter according to the present invention;

Figure 3 is a block diagram of a high-level architecture of the auxillary processor in Figure 2;

Figure 4 is a block diagram of the microcontroller of the Figure 3 auxillary processor;

Figure 5 is a flow chart for illustrating one mode of functioning of the Rx Statistics State Machine of Figure 3;

Figure 6 is a flow chart for illustrating a second mode of functioning of the Rx Statistics State Machine of Figure 3;

Figure 7 is a flow chart for illustrating the operation of the Tx Statistics State Machine;

Figure 8 is a diagram of the register map of the auxillary processor;

Figure 9 is a diagram showing the bits in the FCTL register of Figure 8;

Figure 10 is a diagram showing the bits in the FIP register of Figure 8;

Figure 11 is a diagram showing the bits in the FCMD register of Figure 8;

Figure 12 is a diagram showing the bits in the FINT register of Figure 8;

Figure 13 is a diagram showing the bits in the FMASK register of Figure 8;

Figure 14 is a diagram showing the bits in the FRLEN register of Figure 8;

Figure 15 is a diagram showing the bits in the VREG register of Figure 8;

Figure 16 is a diagram showing the bits in the XREG register of Figure 8;

Figure 17 is a diagram showing the auxillary processor statistics registers in Token-Ring mode;

Figure 18 is a diagram showing the auxillary processor statistics registers in Ethernet Mode;

Figure 19 is a diagram of the register map of the auxillary processor, during reset;

Figure 20 is a diagram showing the bits in the FADR register, during reset;

Figure 21 is a diagram showing the bits in the RAM1 register;

Figure 22 is a diagram showing the bits in the RAM2 register;

Figure 23 is a diagram showing the bits in the RAM3 register;

Figure 24 is a diagram showing the bits in the RAM4 register;

Figure 25 is a diagram showing the bits in the RAM5 register;

Figure 26 is a diagram showing the bits in the RAM6 register;

Figure 27 is a flow diagram for illustrating the datapath in the auxillary processor microcontroller;

Figure 28 is a diagram showing the auxillary processor entry point allocation scheme;

Figure 29 is a flow diagram for illustrating the prioritization of SIF tasks;

Figure 30 is a flow diagram for illustrating the operation of the Rx DUPADR state machine;

Figure 31 is a diagram showing the pin assignments for an auxillary processor according to the present invention; and

Figure 32 is a block diagram of the auxillary processor of the present invention.

Referring initially to Figure 2, a LAN adapter 200 is illustrated. The adapter includes a first main processor 202, which in this case, is a member of the TMS 380Cx6 family. The main processor 202 is shown in greater detail in Figure 1. The adapter further includes an auxillary processor 204; a network interface 206 connected to network 208; a memory 210 and an adapter bus 212 to provide communication between the first processor, the auxillary processor and the memory. The auxillary processor provides hardware to accelerate the frame processing rate of the main processor 202. The CPU of the processor 202 is responsible for frame transport between network and host via host bus 214 gathering adapter and network statistics local network management and Media Access Control (MAC protocols). The auxillary processor puts the adapter performance bottlenecks of frame transport and statistics gathering into dedicated hardware, leaving the CPU of processor 202 to run MAC and management protocols and other non-performance critical functions. The auxillary processor is responsible for:

Management of all processor PH (Protocol Handler) operations, such as all receive and transmit queues;

Management of adapter buffers (memory management) by allocating them to appropriate queues as required;

Management of frame transfers to and from the host system. The auxillary processor interprets and acts on Host Rx/Tx list information to transfer frames between the adapter and host. It is solely responsible for all frame Rx/Tx list operations in normal operation. Exceptional conditions such as error recovery are dealt with by the CPU of processor 202; and

Gathering of Adapter and Network statistics in dedicated hardware counters. The auxillary processor has to be responsible for statistics gathering as the CPU is no longer involved in the routine transfer of frames.

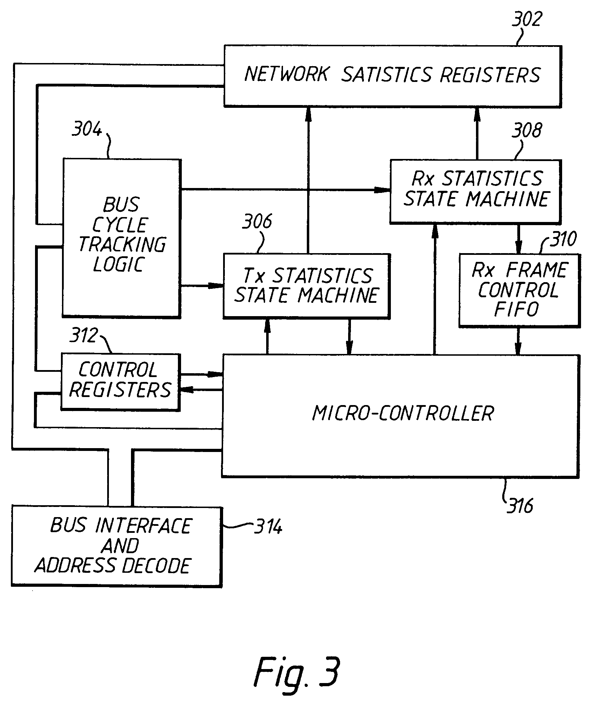

Referring to Figure 3, the overall high level Architecture of the auxillary processor is shown. It is made up of a number of major functional areas, each of which is described in more detail below.

Network Statistics register 302 provides a set of 16 byte-wide incrementer registers, to maintain adapter and network statistics.

A bus cycle tracking logic block 304 monitors the adapter bus for certain significant bus cycles and indicates their presence to the Statistics SMs and the microcontroller.

A Tx statistics state machine 306 collects Tx statistics and monitors ongoing auxillary processor (FPA) transmissions for the microcontroller.

An Rx statistics state machine 308 collects Rx statistics and stores information about received frames in the Rx frame control FIFO for use by the microcontroller.

An Rx frame control FIFO 310 transfers information about received frames between the Rx statistics SM and the microcontroller. FIFO storage provides the microcontroller with latency in servicing incoming frames. Its contents pass useful frame information to the microcontroller such as frame-type, whether to reject the frame or not and if it is a single or multibuffer frame.

Control registers 312 are the main interface between the main processor CPU and the auxillary processor (FPA). A command register initiates auxillary processor functions, a status register reports back on their status and interrupt registers allow the auxillary processor to interrupt the CPU.

A bus interface and address decode block 314 provides the interface between the auxillary processor and main or communication processor bus. The auxillary processor is both a bus master and a slave. The address decode, is used to decode register accesses to control and statistics registers in slave mode. For microcontroller bus-master cycles this block generates the appropriate memory bus signals for the cycle.

A microcontroller 316 is provided which is a horizontally microcoded datapath with an SRAM control store. All buffer management, frame transfer and SIF management are accomplished by the microcontroller. Separate state storage latches and scheduling logic allow it to prioritize activity between all the different FPA tasks.

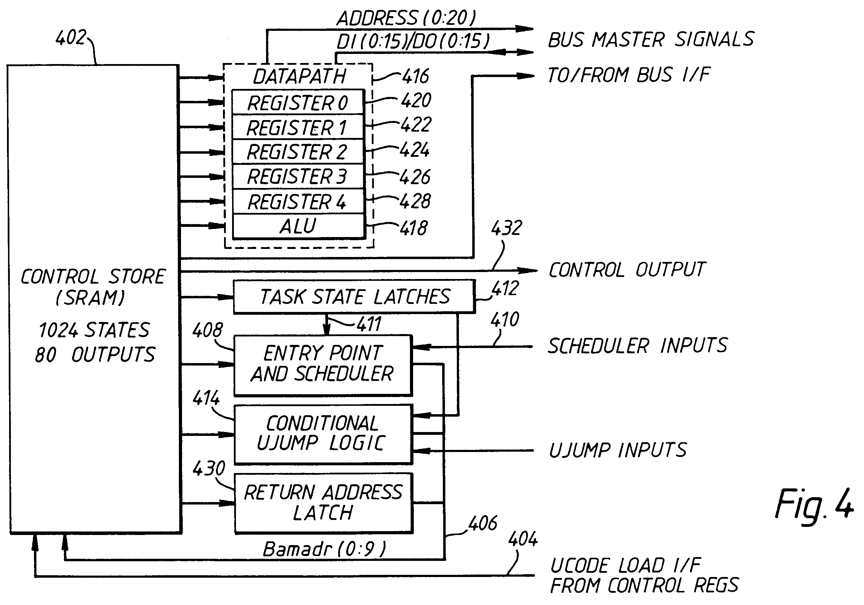

The architecture of the microcontroller is shown in greater detail in Figure 4.

A control store 402 is provided which holds the microcontroller program or microcode (μcode). Normally, control stores are implemented as ROM, but the auxillary processor control store is Read Access Memory (RAM). This gives the auxillary processor the potential for customized μcode sets for particular applications. Because almost all auxillary processor functionality is driven by the stored μcode, design risk is substantially reduced because μcode debug can take place without hardware modification.

The Control store is implemented as a 1024x80 SRAM. It is indirectly accessible from the control register set 404 during intialization to allow μcode load (and verification). The 1024 states are accessed by way of a 10 bit state address from the Ramadr (0:9) bus 406. The 80 RAM outputs are used to control microcontroller operation and as outputs to other FPA blocks.

An Entry point and schedule logic block 408 provides initial state addresses for μcode execution. The Entry point logic provides a set of hardwired values that can be used as Control Store addresses. Normally each μcode state provides the address of the next state to be executed, but under certain conditions this address is replaced by an Entry point address.

The Scheduler (part of 412) provides inputs 410 and 411 which prioritize the states of the different μcode tasks using their states (stored in the Task state (411) latches), and external stimuli from the Statistics S.M.s (410) to determine which μcode sequence should be executed next and to create its Entry point (state address). When a μcode sequence completes it can request the Entry point logic to cause μcode execution to switch to the next scheduled task.

Task state latches 412 allow the microcontroller to multi-task between duties by storing necessary state information. For example, that the SIF receive task is awaiting the completion of a Rx-list DMA. Task state information is used by the scheduler to determine which μcode should be executed next. Some state bits can be used as the basis of conditional μcode jumps.

A conditional μJump logic block 414 provides simple conditional branches in μcode execution by allowing a selected condition to alter the least significant bit of the next state address. Each μcode state holds the address of the next state to be executed. The conditional μJump logic modifies the Least Significant Bit (LSB) of this address if the selected condition is true. This of course requires that the addresses of the two possible outcomes of the branch are assigned addresses that differ only in their LSBs.

A datapath 416 is provided which consists of a simple Arithmetic Logic Unit (ALU) 418 and five general purpose registers, 420, 422, 424, 426 and 428. In addition the datapath receives a 16 bit constant value from the Control store. Under μcode control the datapath is used to create all auxillary processor (FPA) bus cycles and perform all arithmetic operations. Data values may be tested and used to make conditional branches in the execution of μcode states.

A return address latch 430 provides a rudimentary μcode subroutine ability. It allows μcode to store a return address before jumping to a shared sequence of μcode states, at the end of which execution is returned to the stored address location. A dedicated return address field in the μcode state allows return addresses to be stored on almost any state. This allows significant compaction of μcode by reuse of common code.

The control store has a number of Control outputs 432 that allow μcode to signal and control the other auxillary processor blocks. For instance they allow the μcode to create interrupts to the main processor CPU, through setting bits in the interrrupt register (part of the control register block).

The auxillary processor is a combination of hardwired monitoring functions and microcoded tasks. The statistics S.M.s and the Bus cycle tracking logic do the monitoring, the Microcontroller executes the tasks.

The statistics S.M.s and the Bus cycle tracking logic monitor adapter operates in realtime to determine what the auxillary processor needs to do. They produce status signals (or FIFO data) which are used by the Microcontroller Scheduler to prioritize μcode tasks.

The Microcontroller executes μcode as a number of "tasks" each of which is a sequence of μcode states that implements a particular function. Tasks are controlled by the scheduler and dispatched through the entry point logic. These hardware functions are roughly equivalent to the scheduler and dispatcher functions of a multi-tasking operating system, but at a much simplified level. The tasks supported by the auxillary processor hardware are listed below in priority order (note: SIF tasks are prioritized in a Round-Robin manner which will be described in greater detail below).

The PH receiver task (PH-RX) deals with frames received from the network by the PH. Using information supplied in the Rx Frame Control FIFO it assigns frames to an appropriate queue, or discards

6

them if necessary. It has responsibility for ensuring the PH has data buffers in which to receive from, and maintain the MAC buffer needed to support Token-Ring MAC operations.

The PH transmitter task (PH-TX) is responsible for transmit retries (Token-Errors) and recycling TX frame buffers.

The User Command tasks (USER-CMDS) are used to initialise the other tasks and to provide service functions. For example, Free__Buffer and Get__Buffer commands provide the LAN Adapter CPU (or main processor CPU) with access to the adapter free buffer queue which is managed by microcode. User Commands are requested by the adapter CPU setting the corresponding FPA command register bit.

The SIF receiver task (SIF-RX) transfers frames passed to it by the PH-RX task to the host using SIF DMA. Its role is to create the Rx list structure seen by the Host.

The SIF transmitter transfers frames from the host and passes them on to the PH transmitter hardware. Its role is to create the Tx list structure seen by the Host.

The SIF user task (SIF-USR) provides the adapter CPU with a DMA transfer service. This is the only method by which the CPU can perform DMAs in normal operation. This service would normally be used by the CPU for Command and Status block transfer etc.

In order to explain the inter-relationship between the hardware and the various μcode tasks, each will be dealt with in turn.

The PH-RX task operates in conjunction with Rx control FIFO, and Rx Statistics S.M. task in the following manner. Frame reception is the auxillary processors most challenging duty, for it cannot directly limit the flow of incoming frames. The combined system of μcode task and hardware must be capable of reliable operation under adverse loading and with wide variation of frame size. Under saturation conditions adapter performance at discarding frames is almost as important as accepting them, as both require auxillary processor processing bandwidth.

In order to stream-line the processing of received frames, filtering duties are performed by the Rx Statistics S.M. and filtering information is passed to the μcode through the Rx FIFO. The Rx Statistics S.M. gathers this information "on-the-fly" as the frame is written to memory (through the services of the Bus Cycle tracking logic), and provides it as a simple code to the Rx FIFO. The following codes are passed to the microcontroller through the Rx FIFO:

REJECT indicates that a frame is in error and its frame buffers should be re-used. As the Rx Statistics S.M. maintains error statistics directly, by incrementing the appropriate error counter so there is no need for the PH-RX task to know the reason for rejection.

MULTIBUF indicates that the frame is more than one buffer in length. This information allows the μcode to have a stream-lined path for single-buffer frames. Short single-buffer frames have the most demanding performance requirements, while multibuffer frames though requiring more processing, arrive at a lower rate, as they must be at least one buffer (1Kbyte) in length.

FRAME__TYPE indicates the type of frame and hence its ultimate destination. The only frame types supported are MAC and Non-MAC frames. FRAME__TYPE is set to a one for MAC frames and to a zero for all non-MAC frames. If the Auxillary Processor control register (FCTL) ETHNET bit is set then FRAME__TYPE will always be zero. The FCTL will be described in greater detail below.

The Auxillary Processor as previously indicated, is capable of snooping information from the local bus. This is intended to indicate the situation where the auxillary processor captures information from the bus, by monitoring PH memory operations. This has the advantage that it is not necessary for the auxillary processor to later go and read information relating to received frames from the buffers. This speeds up the operation of the auxillary processor. The snooping occurs as data is transferred from the LAN to the local memory on the bus. In this manner, the auxillary processor can identify the types of frame being transferred as the data is actually being transferred. Frame type information is needed to determine the destination of received frames (whether they are to be processed by the host or the local CPU). In addition, the auxiliary processor can determine the status of frame reception by monitoring status as it is written into memory by the Protocol Handler.

In prior art systems, by comparison, the information relating to frame type and status could only be determined after frame reception was complete, and the CPU interrupted. This often took the CPU a number of memory cycles which caused delay to the processing of frames.

With status information the auxiliary processor can also determine the error codes from the Protocol Handler for the frames, for example too many collisions, CRC errors, etc. The Auxiliary Processor decodes these error codes from the bus and uses them to increment appropriate error counters.

In general if an error code of any sort is detected the frame carrying that code is rejected and disposed of. Only when the frame is good will the frame be accepted and go on for some other useful purpose.

The PH_RX task has four $\mu$code Entry points issued by the scheduler. These different Entry points are scheduled based on the state of the Rx FIFO, the Rx Statistics S.M. and MACINUS latch. The MACINUS state latch is a single latch bit which can be set or cleared by $\mu$code (using the SETSTATE and STATE outputs). This bit is used to indicate use of the Token-ring MAC (or Express) buffer. This is a reserved buffer, used to maintain MAC operation even when all other receive buffers have been consumed (ie in congested stations). The latch status indicates whether or not this reserved buffer is in use. Its value is used by the schedule to determine if $\mu$code using the MAC buffer can be scheduled or not.

If the Rx Statistics S.M. indicates RXDRY && RXSTOP then the "DRY" entry point is used. This is an indication that the PH receiver has stopped although there are buffers on the receive queue. This is because the PH_RX microcode added these buffers to the queue just after the PH read a zero list forward pointer. If the $\mu$code saves the address of the last buffers written to the tail of the queue, it can quickly restore PH reception from this entry point.

If the Rx Statistics S.M. indicates RXSTOP && RXDRY and the MACINUS latch is not set the EXB entry point is used. This is an indication that the PH receiver has stopped and the MAC "express" buffer should not be used. The $\mu$code at this entry point should quickly restart the PH using this buffer, and set the MACINUS flag.

The REJECT Entry point has lower priority than DRY or EXB. If there is data from the Rx Statistics S.M. in the FIFO and this data indicates REJECT this entry point is used. This is an indication that the next frame to be serviced should be returned to the tail of the receive queue for re-use.

The ACCEPT Entry point also has lower priority than DRY or EXB. If there is data from the Rx Statistics S.M. in the FIFO and this data indicates ACCEPT this entry point is used. This is an indication that the next frame to be serviced should be passed on (if possible) to the receive queue indicated by FRAME_TYPE as address index to locate the address of the destination queue. This indirection allows the selection of which frame types are passed on to the SIF queue (managed by SIF_RX) for forwarding to the host, and which are processed by the Token-ring MAC task.

The SIF tasks provide the illusion of three independent intelligent DMA channels to the host, through a single simple DMA controller. To do this they must:

Share use of the SIF DMA controller so that one task does not exclude the others. This is especially important in Receive congestion where a high receive loading must not prevent frame transmission.

Execute a series of individual DMAs in order to provide the list interface. For example the TMS380 Rx-list interface for frame reception requires three separate DMAs per frame. One to read the list that describes the frame destination, one (at least) to transfer the frame, and one to write back frame status and length to the list.

The SIF DMA controller has no queuing capability, so the SIF $\mu$code must wait for each DMA to be complete in order to determine if it is successful, before setting up another DMA. SIF code, therefore, executes as a sequence of code segments, each separated by a DMA transfer during which the task waits.

These requirements are achieved by the SIF task scheduling scheme implemented by the Scheduler and Task state latches.

The Scheduler maintains a record of the current active SIF task (SIF_RX, SIF_TX or SIF_US). Tasks are scheduled on a Round-Robin basis only when the current active task "defers". The active task can determine if other tasks are waiting by conditionally branching on DEFEREQ. This non-preemptive scheme ensures any on-going DMAs is completed, and any necessary data stored, before task switching.

The active SIF task can disable itself until a DMA operation completes. During this time other (non-SIF) tasks can run. On DMA completion, and if no other higher priority tasks are active (ie: PH or User), it will be restarted using an Entry point based on the contents of its Task state latches.

Each SIF task has three state storage bits in the Task state latches block. These bits are used to both indicate the "State" of the task and control its next $\mu$code Entry Point.

A state of Zero or One indicates the task is idle and should not be Scheduled. An idle task does not take part in the Round-Robin process.

A state of One is the "Suspended" state. This state is used to indicate the task is idle but not "dead" or uninitialized. The Suspended states both the SIF_RX and SIF_TX tasks can be tested for by $\mu$code conditional branches. These states allow the PH tasks to determine that their partner SIF task has suspended due to lack of work. The PH task can then restart the SIF task if necessary by writing the appropriate task state bits. For example, the SIF_RX task will enter this state if the SIF receive queue is empty (no frames left to transfer). The PH_RX process will then wake it up when a frame is received.

The other states are used to indicate that the task is active, and to indicate which $\mu$code Entry point to use. Each state has a separate Entry Point. These states are normally used to indicate which segment of

μcode to run next after DMA completion, or deference to another task.

The PH__TX task operates with the Tx Statistics S.M. and functions as follow. Frame transmission is supported by a non-queued system based on the main processor TURBOMAC code. Frames are passed to the PH transmission one at a time rather than being queued, as this simplifies transmit list management. This also simplifies the duties of the Tx Statistics S.M. and the PH__TX task.

The Tx Statistics S.M.s duties are to detect that the PH has ended transmission of buffers and/or of the whole frame. This information is used to schedule the two PH__TX Entry Points EOB and EOF:

If the Tx Statistics S.M. detects an End__Of__Buffer (EOB) condition (PH clearing the Buffer STS field) for Tx, this Entry Point is scheduled. μcode should recycle the transmitted buffer back to the transmit queue. If the SIF__TX process has suspended waiting for buffers it should be woken-up.

If the Tx Statistics S.M. detects an End__Of__Frame (EOF) condition (PH writes the Buffer STS field with the EOF bit set) for Tx, this Entry Point is scheduled. μcode should write back frame status to the appropriate list CSTAT, and recycle the transmitted buffer back to the transmit queue. If the SIF__TX process has suspended waiting to send another frame it should be woken-up. Should a Token-Ring transmission have completed with a Token-Error error code, the frame should be resent. This is the only condition under which retransmission is necessary, and it can only occur on the first frame buffer.

There are a number of microcode symbols used with this invention. These are listed below with their intended meaning.

**CONST(x)**

Sets Constant to specified value **x.** This is a 16 bit value.

**TMPn>DO**

Places the contents of register n on the DO (Data Out) bus.
Eg TMP0>DO places contents of register 0 on the DO bus.

**CONST>DO**

Places the Constant on the DO (Data Out) bus. The value of the Constant is specified in a previous CONST-(x) symbol.

**TMPn>AL**

Places the contents of register n on the AO (Address Out) bus as a "low" (absolute) address. The register value is left shifted by 1 bit to create a word address. This allows direct access to the first 128 Kbytes of the main processor memory.

**TMPn>AH**

Places the contents of register n on the AO (Address Out) bus as a "high" (page) address. The register value is left shifted bu 10 bits to create a (1Kbyte) page address compatible with TMS380 Buffer addressing. The low-order 10 bits are driven as zeros.

**CONST>AL**

Places the Constant on the AO (Address Out) bus as a "low" (absolute) address. The Constant value is left shifted by 1 bit to create a word address. This allows direct access to the first 128 Kbytes of the main processor memory. Note that if CONST>AOL and TMPn>AOH (or TMPn>AOL) are simultaneously active the AO bus value is the logical OR of the two values.

**TMPn>AA**

Places the contents of register **n** on the ALU A-port.
Eg TMP0>DO places contents of register 0 on the ALU A-port.

**CONST>AA**

Places the Constant on the ALU A-port. The value of the Constant is specified in a previous CONST(x) symbol.

**TMPn>AB**

Places the contents of register **n** on the ALU B-port.
Eg TMP0>DO places contents of register 0 on the ALU B-port.

**CONST>AB**

Places the Constant on the ALU B-port. The value of the Constant is specified in a previous CONST(x) symbol.

**DI>TMPn**

Places the contents of the DI (Data In) bus into register **n**.
Eg DI>TMP0 places contents of the DI bus into register 0.

**DI>TMPnm**

Places the contents of the DI (Data In) bus into registers **n** and **m**.
Eg DI>TMP01 places contents of the DI bus into registers 0 and1.

**AR>TMPn**

Places the ALU R-port (Result) value into register **n**.
Eg AR>TMP0 places the ALU result into register 0.

**ALU(yyy)**

Performs ALU function yyy. See below for possible values of **yyy**.

**BUSREO**

Requests use of adapter bus for next μcode state. The next μcode state will be delayed until the bus is given to the FPA.

**FTYP>AO**

If the FIFO Frame Type bit indicates a MAC frame logically OR a value of eight onto the AO (Address Out) bus. Note this is a word address, so it OR's sixteen onto the byte address.

**WRITE**

Creates a write cycle on the adapter bus. All other FPA cycles (for which the bus was requested), are by default Read cycles.

**ENTRY**

Causes the Entry point and Scheduler to provide next μcode state address.

**POP**

Reads a new entry from the Rx Frame Control FIFO.

**SAVEAD**

Saves state address in associated SAVE variable into the Return Address latch.

**SAVE (state_adr)**

State address to be saved in the Return Address latch.

**RETURN**

Uses the contents of the Return Address latch as the address fo the next μcode state.

**DMA_WAIT**

Causes the Scheduling of SIF μcode to be disabled until completion of (current) SIF DMA.

**DEFER**

Schedule next SIF μcode task (if any). The three SIF μcode tasks Rx, Tx and User, are scheduled on a round-robin basis whenever DEFER is asserted.

**CONST>SC**

Loads the FPA Status latch with a Constant value. The SC latch is used to generate the Adapter bus status code byte. The SC latch is loaded with 0x50 at reset, which sets the default FPA bus status code (0x50 is equivalent to a device code of ten).

**SETSTATE(a)**

Sets latch indicated by **a** to the value indicated by a corresponding STATE symbol. See below for possible values of **a**.

**STATE(b)**

Indicates the value **b** to be used in a corresponding SETSTATE symbol.

**JUMP(state_adr)**

Uses **state_adr** as the address of the next microcode state.

**COND(zzz)**

Performs a conditional branch in μcode execution if condition **zzz** is true. See below for possible values of **zzz**.

**JUMP2(state_adr1, state_adr2)**

Indicates the two state addresses that are to be used for a conditional branch. Use **state_adr1** as the address of the next microcode state if the condition is false. Use **state_adr2** as the address of the next microcode state if the condition is true.

**ABJUMP**

Indicates that the L.S. three bits of the jump address be replaced with normalized value of the L.S. byte of the Alu B bus. Normalizing creates a three bit code from the byte where the code indicates the leftmost one in the byte. If there is a one in the M.S. bit of the byte a code of zero is generated (independant of the state of the other seven bits). If the only bit set is the L.S. bit then a code of 7 is generated. When the byte is zero a code of 0 is generated.

**JUMP8(state__adr0, state__adr1, state__adr2, state__adr3, state__adr4, state__adr5, state__adr6, state__adr7)**

Indicates the eight state addresses that are to be used for an ABJUMP. This symbol is used primarily for Address Allocation. A null address (0) indicates the address is a don't care, and need not be reserved for the jump. At least one of the state addresses state__adrn must be non-zero. The base for the ABJUMP is determined by ignoring the L.S. three bits of the state addresses.

There are as previously indicated, a number of microcode variables, these with their respective meanings are listed below for ALU operation the variables include.

| | |
|---|---|
| ALU(ZEROS) | AR = 0x0000; |
| ALU(AANDNB) | AR = AA & $\overline{AB}$; |
| ALU(AANDNB) | AR = AA & AB; |
| ALU(A) | AR = AA; |
| ALU(NAANDNB) | AR = $\overline{AA}$ & $\overline{AB}$; |
| ALU(NB) | AR = $\overline{AB}$; |
| ALU(AXNORB) | AR = (AA & AB) | ($\overline{AA}$ & $\overline{AB}$); |
| ALU(AORNB) | AR = AA | $\overline{AB}$; |
| ALU(NAANDB) | AR = $\overline{AA}$ & AB; |
| ALU(AXORB) | AR = (AA & $\overline{AB}$) | ($\overline{AA}$ & AB); |
| ALU(B) | AR = AB; |
| ALU(AORB) | AR = AA | AB; |
| ALU(NA) | AR = $\overline{AA}$; |
| ALU(NAORNB) | AR = $\overline{AA}$ | $\overline{AB}$; |
| ALU(NAORB) | AR = $\overline{AA}$ | AB; |
| ALU(ONES) | AR = OXFFFF; |
| ALU(ADD) | AR = AA + AB; |
| ALU(SUB) | AR = AA - AB; |
| ALU(AND) | AR = AA & AB; |
| ALU(INC) | AR = AA + 1; |
| ALU(DEC) | AR = AA - 1; |
| ALU(BYT__SWP) | AR(0-7) = AA(8-15); AR(8-15) = AA(0-7); |
| ALU(BIT__BYT) | AR(0-7) = AA(7-0); AR(8-15) = AA(15-8); |

Where AA is the ALU A-port value, AB the ALU B-port value, and AR the ALU R-port value. Logical and Arithmetic operators follow the conventions of the C programming language.

For COND values the variables are given below along with the meaning intended by each variable:-

**COND(MULTIBUF)**

Branch if the Multibuf from the Rx Frame Control FIFO is set. This signal indicates that the current Rx buffer is part of a multiple buffer frame.

**COND(RXEOF)**

Branch if the EOF bit from the Rx Frame Control FIFO is set. This signal indicates that the current Rx buffer is the last buffer of a frame.

**COND(ALUB)**

Branch if the current ALU B-port value is non-zero.

**COND(NA__OR__NB)**

Branch if either ALU input port has a Zero value on it this cycle.

**COND(RXDRY)**

Branch if the Rxdry signal from the Rx Statistics S.M. is active.

**COND(RXSTOP)**

Branch if the Rxstop signal from the Rx Statistics S.M. is active.

**COND(MACINUSE)**

Branch if the MAC__INUS latch in the PH__RX Task state latches is set.

**COND(DEFEREO)**

Branch if there is another SIF task ready to execute. This test allows μcode to determine if another SIF task wishes to execute and "share" the SIF>

**COND(RXDMAWAT)**

Branch if the SIF__RX task has suspended awaiting frames from the network. This test allows the PH__RX task to determine that the SIF__RX task has suspended and wake it up when frames become available.

**COND(TXDONE)**

Branch if the Tx Statistics S.M. indicates that frame transmission has completed (TXDONE).

**COND(TXBUFWAT)**

Branch if the SIF__TX task has suspended awaiting frames transmission on the network. This test allows the PH__TX task to determine that the SIF__TX task has suspended and wake it up when necessary.

**COND(SIFRDY)**

Branch if the SIF DMA controller is ready for use.

**COND(TXHALT)**

Branch if the PH__TX TXHALT flag is set.

**COND(TXCHAN)**

Branch if the PH__TX TXCHAN flag is set.

**COND(SWAP)**

Branch if the FCTL register SWAP bit is set.

**COND(ABn)**

Branch if bit n of the current ALU B-port value is set ($0 \leq n \leq 15$)

The Symbols for SETSTATE and STATE are used to set task state latches in the Task state latches block, Command register bits, and interrupt bits. The SETSTATE symbol indicates what is being set. STATE is a 3 bit value which is either used directly (in state latches) or as an index to one of 8 bits (in cmd or interupt bits).

SETSTATE (SIF__RX) causes SIF__RX state latches to be set. The stored state is used to determine the next Entry point used by the task. A state of zero means the task is terminated. A state of one indicates it is suspended (RXDMAWAT).

SETSTATE (SIF_TX) causes SIF_TX Task state latches to be set. The stored state is used to determine the next Entry point used by the task. A state of zero means the task is terminated. A state of one indicates it is suspended (TXBUFWAT).

SETSTATE (SIF_US) causes SIF_US (User) Task state latches to be set. The stored state is used to determine the next Entry point used by the task. A state of zero means the task is terminated.

SETSTATE (PH_RX) is used to signal information to the Rxstats S.M. and change the state of the MACINUS flag. Valid values of STATE (..)are:

| | |
|---|---|
| STATE(RCPWRIT) | Signal RCP_WRITE to the Rxstats S.M.. |
| STATE(RXQ_MOD) | Signal RXQ_MOD to the Rxstats S.M.. |
| STATE(SETMAC) | Set the MACINUS flag. |
| STATE(CLRMAC) | Clear the MACINUS flag. |

SETSTATE (PH_TX) is used to signal information to the Txstats S.M. and change the state of the TXHALT and TXCHAN flags. Valid values of STATE (..) are:

| | |
|---|---|
| STATE(TCPWRIT) | Siganl TCP_WRITE to the Txstats S.M.. |
| STATE(EOBDONE) | Signal EOBDONE to the Txstats S.M.. |
| STATE(EOFDONE) | Signal EOFDONE to the Txstats S.M.. |
| STATE(SETHALT) | Set the TXHALT flag. |
| STATE(CLRHALT) | Clear the TXHALT flag. |
| STATE(SETCHAN) | Set the TXCHAN flag. |
| STATE(CLRCHAN) | Clear the TXCHAN flag. |

SETSTATE (CLR_CMD) is used to clear the indicated bit in the Command register. This indicates that the indicated command has completed, and allows it to be re-issued.

SETSTATE (SET_INT) is used to set the indicated command interrupt bit, if the corresponding interrupt enable bit (FMASK register) is set.

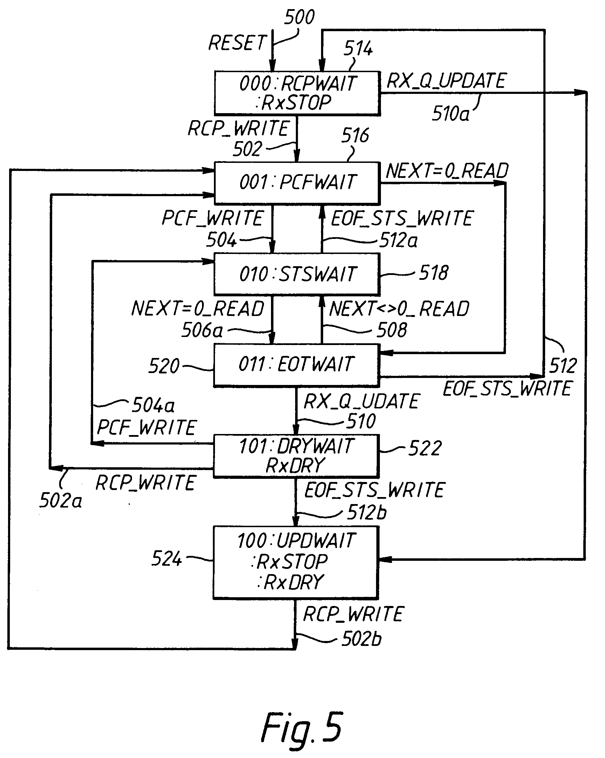

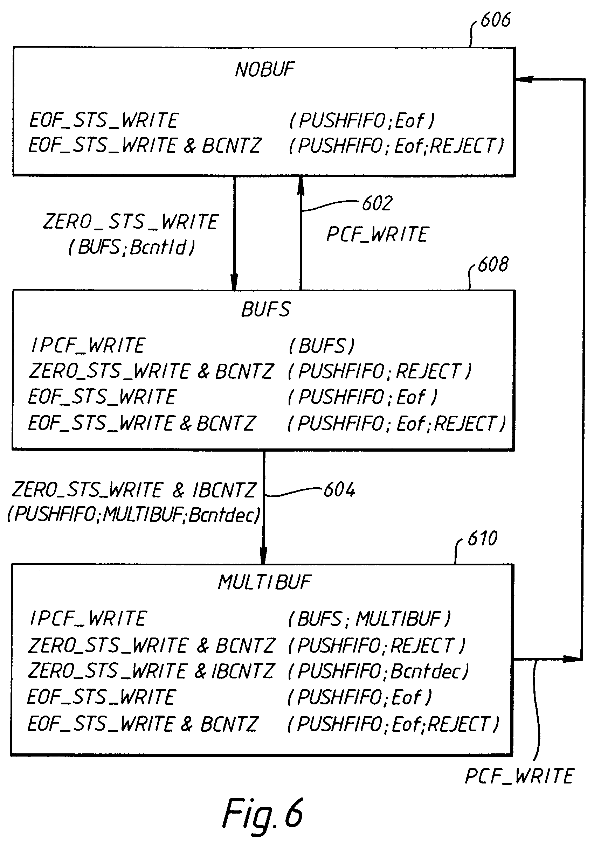

The Rx State Machine (Rxstats S.M.) is responsible for supporting the PH_RX task, by filtering frames and managing receive congestion. Figure 5 is a state diagram for illustrating the operation of the Rx Statistics S.M. in Rx control, and figure 6 is a state diagram illustrating operation of the Rx Statistics S.M. under multibuffer management.

In order to stream-line the processing of received frames, the Rxstats S.M. pre-filters received frames, passing frame type and Accept/Reject codes to the μcode through the Rx FIFO. It gathers this information "on-the-fly" as the frame is written to memory (through the services of the Bus Cycle tracking logic), and provides it as a simple code to the Rx FIFO.

The Rxstats S.M. helps the μcode manage receive congestion by monitoring Receive queue updates, and scheduling the use of the Express buffer.

The Rx Statistics S.M. inputs shown in figures 5 and 6 are now described. Except where stated, these inputs come from the Bus Cycle Tracking logic.

The RCP_WRITE input 502 is an indication from the μcode that it is updating the PH RCP register. The RCP (Receive Chain Pointer) register is written with the page address of the head of the Receive queue to (re)start the receiver. This signal is created using the SETSTATE(PH_RX), STATE(RCPWRIT) command.

The PCF_WRITE input 504 indicates the first word of a received frame is being written to memory by the PH. This first word was originally called the PCF0/1 word by Token-ring hence the acronym. A dedicated Bus status code from the main processor bus allows easy identification of this word. The word includes the Token-Ring MAC/LLC indicator bit the value of which is latched for use in generating the FIFO FRAME_TYPE code.

The NEXT=0_READ input 506 indicates that the PH receiver is reading a zero buffer forward pointer. If the forward pointer is not re-read as non-zero the receiver will stop as it has reached the end of the receive queue.

The NEXT<>0_READ input 508 indicates that the PH receiver is reading a non-zero buffer forward pointer.

The Rx_Q_UPDATE input 510 is a direct indication from microcode that it is updating the tail of the Rx queue. This signal is created using the SETSTATE(PH_RX), STATE(RXQ_MOD) command.

The EOF__STS__WRITE input 512 indicates that the PH receiver is writing a frame completion status to a buffer. The frame status word contains Rx statistical information and match type information. The statistics information should be used to increment the appropriate statistics registers (Eg CRC errors). The match type information is used in generating the FIFO FRAME__TYPE code. Data is written to the FIFO on this signal.

The ZERO__STS__WRITE 602 indicates that the PH receiver is clearing the contents of a buffers status field.

The BCNTZ input 604 indicates that the content of the buffer count decrementor is zero. This means the frame has consumed an excessive number of buffers.

The State Machine States of the Rx Statistic S.M.s are now described with reference to figures 5 and 6.

RCPWAIT 514 indicates that the PH receiver has stepped. In this state output RXSTOP is asserted, if the MACINUS flag is not set then the EXB PH__RX Entry point will be scheduled. This ensures that the Express buffer is automatically put into use whenever the PH receiver runs out of normal buffers.

The PCFWAIT state 516 indicates that the S.M. is waiting for a frame to start being received.

The STSWAIT state 518 indicates that a frame has begun to be received.

The EOFWAIT state 520 indicates that a zero buffer forward pointer has been read. If this is not reread as non-zero before the end of a frame the receiver will stop.

The DRYWAIT state 522 indicates that the PH__RX task has added buffers to the tail of the receive queue, after the PH read it as zero. In this state output RXDRY is asserted, this informs the PH__RX task that it should not alter its "last buffer added to rx queue" variable because the PH has read a zero forward pointer.

The UPDWAIT state 524 indicates that the receiver has stopped although there are buffers on the receive queue. In this state outputs RXDRY and RXSTOP are asserted, this causes the DRY PH__RX Entry point to be scheduled. This ensures that the buffers added onto the receive queue after the zero forward pointer read are brought into service as soon as the PH receiver stops.

The NOBUF state 606 indicates that a frame has just begun.

The BUFS state 608 indicates that the first buffer status clear has occurred. Subsequent buffer status clears can be used to count the number of buffers in the frame.

The MULTIBUF state 610 indicates that two buffer status clears have occurred for a frame, so the frame is a multi-buffer frame. This is important status information for the $\mu$code. Multibuffer frames must also be checked to ensure they do not exceed the frame buffer count limit set in the FRLEN register. On entry to the BUFS state the buffer count decrementor is loaded from the FRLEN register L.S. byte. It is decremented by one for each subsequent buffer status clear. Shoul its value ever reach zero all subsequent buffers should be marked as "Reject" in Rx FIFO.

The following points relate to the transitions of the Rx statistics state machine and the numbers indicate the step or state to which the point refers.

| | |
|---|---|
| 502 | RCP is written starting the receiver. |
| 504 | The first word of the frame is written. |
| 506 | A zero forward pointer has been read, even before frame reception has begun. |
| 512a | EOF status is written for a normal frame. |
| 506a | A zero forward pointer has been read during frame reception. |
| 508 | A zero forward pointer has been re-read as non-zero during frame reception. Normally this would be as a result of buffer recovery of the original frame. |
| 510 | The PH__RX task has updated the rx queue tail after it has been read as zero by the PH. |
| 512 | Frame status has been written to memory signalling End of Frame, after a zero buffer forward pointer was read. The PH receiver will therefore have stopped. |
| 502a | This seemingly unnecessary term is provided in case the S.M. gets stuck in the DRYWAIT state. |
| 512b | Frame status has been written to memory signalling End of Frame, after a zero buffer forward pointer was read, and the rx queue tail updated. The PH receiver will therefore have stopped, although there are buffers on the receive queue. |
| 504a | The first word of a new frame is written although a zero forward pointer was previously read. Buffer recovery has obviously taken place, so the forward pointer will be re-read. |
| 510a | The PH__RX task has updated the rx queue tail after the PH has stopped. |

The outputs of the Rx Statistic S.M.s are indicated below.

The MULTIBUF output indicates that the received frame is more than one buffer in length.

The RXDRY output indicates that the receive queue tail has been updated after the PH has read a zero forward pointer.

The RXSTOP output indicates that the PH receiver has stopped.

The REJECT output indicates frames that exceed the frame buffer limit set in the FRLEN register will have the excess buffers marked as REJECT. Hardware in the Bus Cycle tracking logic will also set the FIFO reject flag under the following conditions:

if the EOF status for the frame did not indicate good frame completion; and/or

if the frame is not an "Express Buffer" and the PH_RX state latch indicates MACINUS. An Express buffer is a Token-Ring MAC frame with MAC control bits in the PCF>1.

The BCNTLD output loads the buffer counter decrementor from the L.S. byte of the FRLEN register.

The BCNTDEC output decrements the contents of the buffer counter decrementor by one.

The PUSHFIFO output pushes the current buffer status (Multibuf; EOF; Reject; Frame_type) onto the Rx FIFO.

The EOF output indicates that the current buffer is the last buffer of a frame.

The Programmable Logic Array (PLA) definition of the Rx Statistical S.M. is set out below.

| Term | Inputs | Outputs |
|------|--------|---------|
| 500 | RESET | Tvar(0,1,2);Clrvars;Bcntld |
| 502 | 000 & RCP_WRITE | Tvar(2); |
| 504 | 001 & PCF_WRITE | Tvar(1,2); |
| 506 | 001 & NEXT=0_READ | Tvar(1); |
| 512a | 010 & EOF_STS_WRITE | Tvar(1,2); |

| 506a | 010 & NEXT=0_READ | Tvar(2); |
|---|---|---|
| 508 | 011 & NEXT<>0_READ | Tvar(2); |
| 510 | 011 & RX_Q_UPDATE | Tvar(0,1); |
| 512 | 011 & EOF_STS_WRITE | Tvar(1,2); |
| 502a | 101 & RCP_WRITE | Tvar(0); |
| 512b | 101 & EOF_STS_WRITE | Tvar(2); |
| 504a | 101 & PCF_WRITE | Tvar(0,1,2); |
| 502b | 100 & RCP_WRITE | Tvar(0,2); |
| 524 | X00 | Rxstop; |
| 522/524 | 10X | Rxdry; |
| 602 | IBUFS & ZERO_STS_WRITE & IRESET | Bufs;Bcntld |
| 608/610 | BUFS & IPCF_WRITE & IRESET | Bufs; |
| 610 | BUFS & IBCNTZ & ZERO_STS_WRITE & IRESET | Bcntdec;Multibuf;Pushfifo; |
| 608/610 | BUFS & BCNTZ & ZERO_STS_WRITE | Pushfifo;Reject; |
| 610 | MULTIBUF & IPCF_WRITE & IRESET | Multibuf; |
| 606/608/610 | EOF_STS_WRITE & IBCNTZ | Pushfifo; EOF |
| 606/608/610 | EOF_STS_WRITE & BCNTZ | Pushfifo;EOF;Reject |
| 510a | 000 & RX_Q_UPDATE | Tvar(0); |

Inputs

    RCP_WRITE
    PCF_WRITE
    NEXT=0_READ
    NEXT<>0_READ
    RX_Q_UPDATE
    EOF_STS_WRITE
    ZERO_STS_WRITE
    BCNTZ
    BADRCC
    MACFR
    EXBFR
    MACINUS

Feedback variables

VAR(0-2)

BUFS

EXB

Output Feedback variables

MULTIBUF

MAC

Outputs

RXSTOP

RXDRY

BCNTLD

BCNTDEC

PUSHFIFO

EOF

REJECT

The bus cycle tracking logic performs some of the filtering duties of the Rxstats S.M.. It is responsible for detecting frames received with errors by the PH and rejecting them, and for rejecting non-express buffer frames when the MACINUS flag is set.

Frames received without a PH receive completion code (rcc) of 0X00 are rejected.

Frames received in Token-ring mode (ETHNET = 0) with the MACINUS flag set, that have a frame FC byte aabbcccc where aa <> 0, or cccc = 0, are rejected.

The bus cycle tracking logic is also responsible for setting the frame__type bit of the Rx FIFO. This bit is set whenever frames are received in Token-ring mode (ETHNET = 0), that have a frame FC byte aabbcccc, where aa = 0;

The formal definition of functions is given by:-

| | |
|---|---|
| PCF__WRITE & MACFR & IETHNET | MAC; |
| IPCF__WRITE & MAC | MAC; |
| PCF__WRITE & EXBFR | EXB; |
| IPCF__WRITE & EXB | EXB; |
| EOF__STS__WRITE & BADRCC | Reject; |
| EOF__STS__WRITE & IEXB & MACINUS & IETHNET | Reject; |

The Tx Statistics State Machine (Txstats S.M.) is responsible for supporting the PH__TX and SIF__TX tasks in the transmission of frames.

The Tx statistics S.M. causes scheduling of the PH__TX task based on completion of buffer and frame transmission. The S.M. relies on inputs from both the Bus Cycle tracking logic and from the PH__TX task (via PH__TX task state information).

Chained transmit by the PH is not supported, frames must be sent individually. This restriction allows μcode to prioritize transmission between multiple transmit channels.

Scheduling of the PH__TX task on buffer completion allows speedy recycling of frame buffers for large frames. Immediate recycling of buffers reduces the number of buffers needed in the transmit pool.

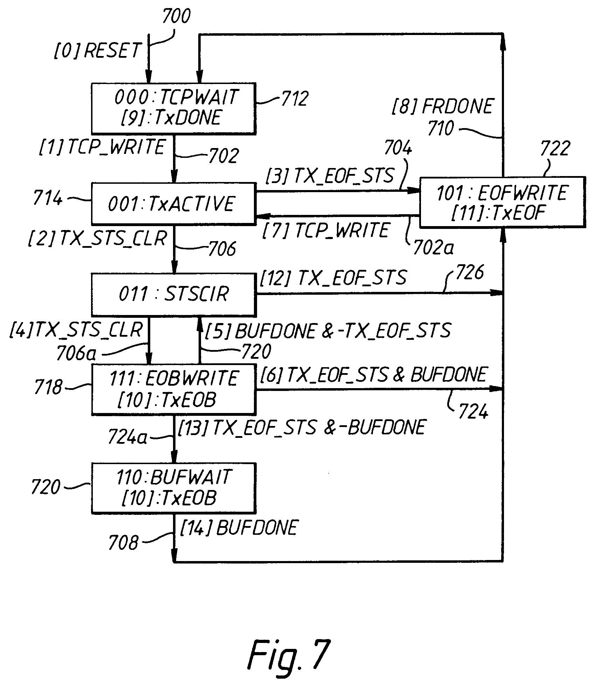

Referring to figure 7, the Tx Statistics S.M. inputs are described in detail below.

Except where stated, these inputs come from the Bus Cycle Tracking logic.

The TCP__WRITE input 702 is an indication from the PH__TX task that it is writing to the PH TCP register. The TCP (Transmit Chain Pointer) register is written with the page address of the first buffer of the frame to be transmitted. This indication is created by the μcode using the SETSTATE(PH__TX), STATE-(TCPWRIT) command.

The EOF__STS__WRITE input 704 is an indication from the bus cycle tracking logic that the PH is writing a frame completion status.

The STS__CLEAR input 706 is an indication from the bus cycle tracking logic that the PH is clearing the status field of a buffer. The PH clears the status field of a buffer once it begins to use it.

The BUFDONE input 708 is an indication from the PH__TX task that it has serviced a buffer, due to a prior TXEOB signal from the S.M.. This indication is created by the Ucode using the SETSTATE(PH__TX), STATE(BUFDUN) command.

The FRDONE input 710. An indication from the PH__TX task that it serviced a frame, due to a prior TXEOB signal from the S.M.. This indication is created by the Ucode using the SETSTATE(PH__TX), SETSTATE(FRDUN) command.

This input creates the S.M. states of the Tx Statistics S.M.. These states are described below.

The TCPWAIT state 712 means that no frame is being transmitted, the PH is waiting for its TCP to be written. In this state ouput signal TXDONE is asserted. This signal can be tested (through a conditional branch) by the μcode to determine when it can write the TCP.

The TXACTIVE state 714 means that the PH Transmitter has begun to transmit a frame, but has not cleared the first buffers status field (yet).

The STSCIR state 716 indicates that at least one frame buffer has had its status field cleared. At this point another buffer status clear will indicate that a buffer has been transmitted.

The EOBWRITE state 718 indicates that the transmission of an intermediate buffer has completed. In this state output signal TXEOB will cause the PH__TX task TXEOB Entry point to be scheduled. This allows μcode to service (clean-up and re-use) the buffer.

The BUFWAIT state 720 indicates an end of frame has been received before processing of an intermediate buffer is complete. This state allows the μcode to complete buffer processing before starting end of frame processing.

The EOFWRITE state 722 indicates the transmission of the frame has completed. In this state output signal TXEOF will cause the PH__TX task TXEOF Entry point to be scheduled. This allows μcode to process the frame completion status.

The Tx Statistics S.M. functions as follows:

| | |
|---|---|
| 700) | The auxillary processor reset forces the S.M. into the tcpwait state. |
| 702) | The TCP__WRITE indication from μcode places the S.M. into the txactive state. |
| 706) | The buffer status field is cleared, indicating the transmission of the first buffer has begun. |
| 704) | The end of frame buffer status field is written, indicating that transmission of the frame is complete. |
| 706a) | ) The buffer status field is cleared, indicating the transmission of another buffer has begun. This means the previous buffer can be serviced. |
| 726) | The PH__TX task signals it has serviced one (or more) buffers so TXEOB can be deasserted. |
| 724) | The end of frame buffer status field is written, indicating that transmission of the frame is complete. |
| 702a) | The TCP is written starting the transmitter once again. This transition prevents lockup in the EOF state, should the μcode fail to assert FRDONE. |
| 710) | The PH__TX task signals it has serviced the frame, so TXEOF can be deasserted. |
| 712) | The TXDONE term creates the TXDONE signal in the TCPWAIT state. |
| 718/720) | This in turn creates the TXEOB signal in the EOBWRITE state. |
| 722) | Then this term creates the TXEOF signal in the EOFWRITE state. |
| 726) | The PH__TX task signals that it has serviced the frame, so TXEOF can be deasserted. |
| 724a) | The end of frame buffer status field is written, indicating that transmission of the frame is complete. |
| 708) | The PH__TX task signals it has serviced one (or more) buffers so TXEOB can be deasserted. |

The following outputs are produced by the Tx Statistics S.M.s.

The TXDONE output indicates that the PH transmitter is currently idle. This signal is an input to the Conditional μjump logic, allowing it to be used for conditional μcode branches.

The TXEOB output causes PH__TX task Entry point "TXEOB". This entry point is responsible for recycling one or more buffers after transmission.

The TXEOB output further causes PH__TX task Entry point "TXEOF". This entry point is reponsible for recycling the remainder of a frame and extracting transmit CSTAT information.

The PLA definition of the above describe TX statistics S.M. is shown below:

| Term | Inputs | Outputs |
|------|--------|---------|
| 700 | RESET | Tvar(0,1,2);Clrvars |
| 702 | 000 & TCP__WRITE | Tvar(2); |
| 706 | 001 & TX__STS__CLR | Tvar(1); |
| 704 | 001 & TX__EOF__STS | Tvar(0); |
| 706a | 011 & TX__STS__CLR | Tvar(0); |
| 726 | 111 & BUFDONE & TX__EOF__STS | Tvar(0); |
| 724 | 111 & TX__EOF__STS & BUFDONE | Tvar (1); |
| 702a | 101 & TCP__WRITE | Tvar (0); |
| 710 | 101 & FRDONE | Tvar(0, 2); |
| 712 | 000 | Txdone; |
| 718/720 | 11X | Txeob; |
| 722 | 101 | Txeof; |
| 726 | 011 & TX__EOF__STS | Tvar(0,1); |
| 724a | 111 & TX__EOF__STS & BUFDONE | Tvar(2); |
| 708 | 1X0 & BUFDONE | Tvar(1, 2); |

The auxiliary processor register address space is compatible with the main processor in one example with the TMS380SRA, for example, and the TMS380 SEADS specification for main processor or COMMprocessor externally attached devices.

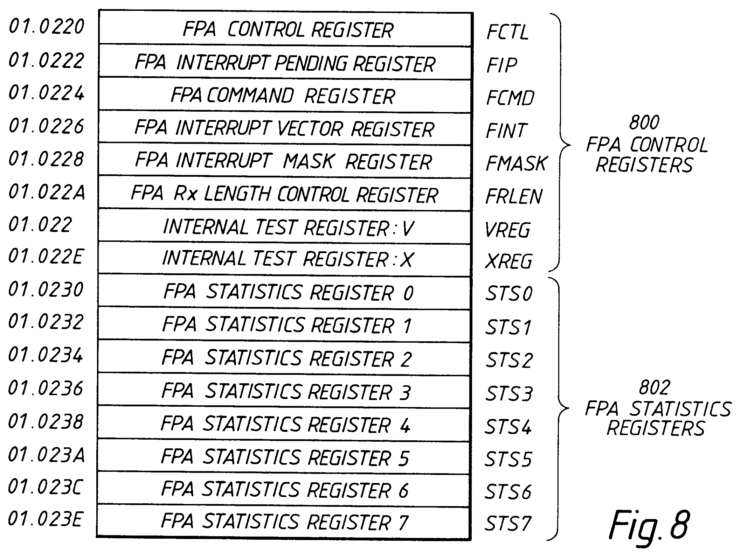

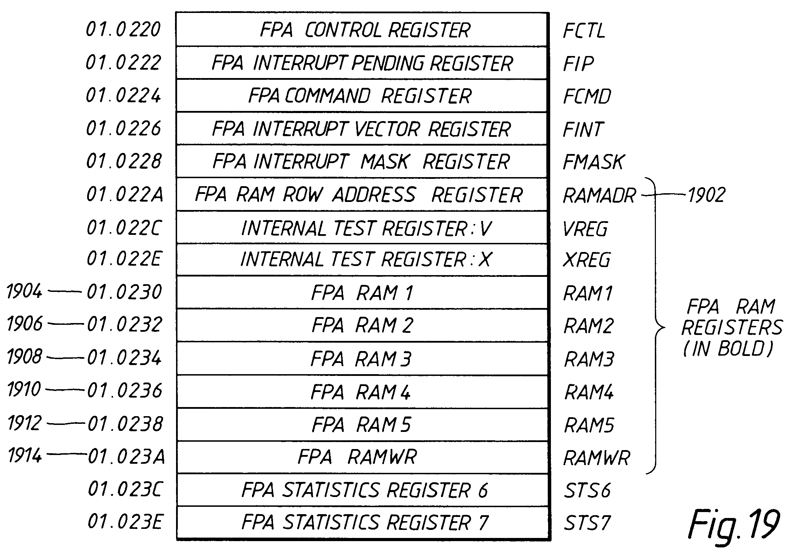

The auxiliary processor has two different register maps, one not during reset, shown in Figure 8, and another when during reset, shown in Figure 19 and described in more detail later.

The register map shown in Figure 8 shows the registers of the auxillary processor (FPA). There are 16 registers, eight of which form the FPA control registers 800 and eight of which for the FPA statistics registers 802. Each register holds a number of bits ranging from the most significant bit (MSB) to the least significant bit (LSB). The following description and associated drawings are used to describe the registers in greater detail.

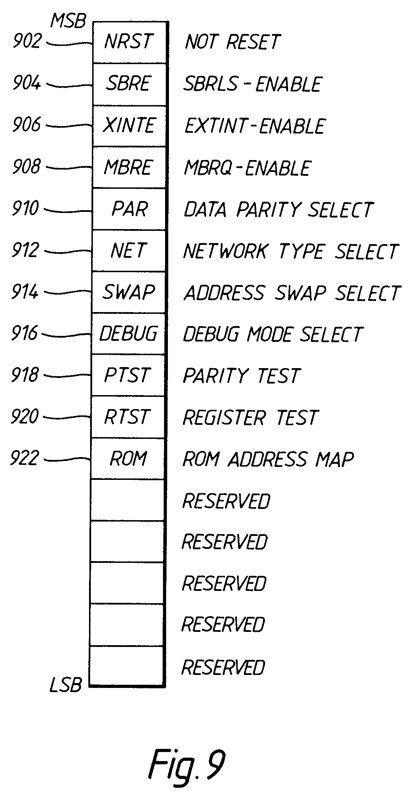

The FPA control register is indicated as FCTL @ 01.0220 in Figure 8, whilst Figure 9 illustrates the contents of the register.

The FCTL is used by the main processor or COMMprocessor to control the interrupt, parity and reset behaviour of a SEADS device. Bit definitions shown in Figure 9 are as follows.

The Not Reset (NRST) bit 902 which when set to zero causes the FPA to enter the reset state. All FPA command bits are cleared, all task control latches cleared, and all S.M.s reset. Setting the NRST bit to one causes the FPA to exit the reset state. The NRST bit is set to a zero by a hardware reset (MRESET pin asserted).

The SBRLS Enable (SBRE) bit 904 is a control bit which enables the use of the FPA SBRLS pin. When set to a zero (default), the SBRLS pin is always driven inactive (high). When set to a one, SBRLS will be driven active (low) whenever the FPA needs to delay SIF DMA transfers. This occurs whenever the FPA requests the adapter bus, but fails to get it due to an adapter SIF__DMA cycle.

The EXTINT Enable (XINTE) bit 906 directly controls the FPA interrupt output pin EXTINT. If this bit is set to zero this open-collector output pin will never be driven. If the bit is set to a one an active FPA interrrupt in the FIP register will cause the pin to be driven low.

The MBRQ Enable (MBRE) bit 908 directly controls the FPA bus request output pin MBRQ. If this bit is set to zero this open-collector output pin will never be driven. When the MBRE bit is set to one, the FPA can drive the MBRQ-pin active low to request adapter bus mastership.

The data Parity Select (PAR) bit 910, when set to one, causes the FPA to check for odd byte parity on all writes to FPA registers, and all FPA bus master read cycles. When a parity error is detected, the PE (Parity Error) bit of the FIP register is set to one. If the XINTE bit is also set to one, the interrupt output pin will be driven active. When PAR is set to zero, parity checking is disabled.

The network type select (NET) bit 912 indicates the type of network in use. If set to a one then a token-ring network is assumed. If set to a zero (default) then an ethernet network is assumed. This control bit is used by the RX Stats S.M. when it passes frames to determine the position of various data fields.

The Address Swap Select (SWAP) bit 914 is used as a signal to the microcontroller that frame MAC addresses should be "bit-byte" swapped. When this bit is set to a zero (default) no address swapping will occur. When set to a one frame MAC address fields of all transmitted and received frames will be "bit-byte" swapped.

The Debug mode Select (DEBUG) bit 916 allows FPA debug mode to be enabled. When the bit is set to zero the FPA operates as normal. When set to one the FPA enters debug mode. In debug mode micro-code state addresses become visible externally on the adapter bus at CAS time when they replace normal bus status information.

The Parity Test (PTST) bit 918, when set to one, causes the FPA to drive a zero parity value for both bytes on all FPA register reads (including unimplemented registers), and on all FPA bus master write cycles. When PTST is set to zero, odd byte parity will always be generated.

The Register Test (RTST) bit 920 when set, allows full write access to register bits that are otherwise read, clear, or set only. This bit is reserved for manufacturing test only.

The ROM Address Map (ROM) bit 922 should in this example, be a copy of the TMS380Cx6 ACTL register ROMEN bit, i.e. the main processor ACTL register ROMEN bit. However, for other main processors other bits may be used. When set it indicates that Chapters 0 and 31 of the adapter address space contain ROM or EPROMs, and that accesses to these addresses should not have CAS asserted, or be checked for parity. When the bit is clear Chapters 0 and 31 contain DRAM (with the exception of the range 00,0000 to 00.000F, which contains the BIA ROM, and is always treated as ROM).

The remainder of the 16 bits of the FCTL register are reserved.

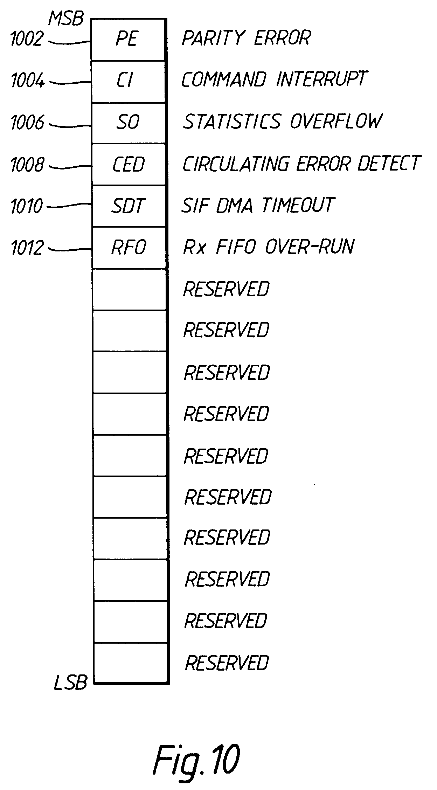

The FPA Interrupt Pending Register is indicated as FIP @ 0.10222 in Figure 8. The FIP is used by the COMMprocessor to read and clear FPA SEADS interrupts. When any of the FIP bits are set, the FPA interrupt request pin XINT will be driven active low if the XINTE bit of the FCTL register is set. The bit definitions of the register are shown in Figure 10.

The Parity Error (PE) bit 1002 signals a parity error interrupt. If this bit is set it indicates that parity was incorrect on a write to an FPA register, or on an FPA bus master read cycle. Writing a one to the PE bit will clear the bit and the interrupt. Writing a zero has no effect.

The command Interrupt (CI) bit 1004 signals a command interrupt from the FINT register. This bit is set of any command interrupt flags becomes set and there were no interrupt flags set previously (rising edge detect). Writing a one to the CI bit will clear the bit and the interrupt. Writing a zero has no effect. Command interrupt flags values can be read from the FMASK register. Command interrupt flags are cleared in order of priority by reading the 3 bit interrupt vector code in the FINT register. The CI bit is only cleared by writing a one to it, clearing the command interrupt flags will not clear it.

The Statistics Overflow (SO) bit 1006 signals a Statistics register overflow interrupt. This bit is set if any of the statistics registers reaches a value greater than 127, and none was already greater than 127 (rising edge defect). Writing a one to the SO bit will clear the bit and the interrupt. Writing a zero has no effect. Once this bit is set, it cannot be set again until all the statistics registers contain values <128 and the bit is cleared by writing a one to it. This can be achieved by reading all the registers (reading a statistics register resets its contents to zero).

The Circulating Error Detect (CED) bit 1008 indicates that the Rx Statistics S.M. has received 15 implicity aborted frames with no intervening good frames. This indicates that there is a circulating error fragment on the ring. Such a fragment can cause receiver overload, so the FPA will not update RCP after this condition occurs, thereby suspending network receive. Receive operations are resumed by writing a one to the FCMD CCE (Clear Circulating Error) bit. The CED interrupt bit is cleared by writing a one to it, writing a zero has no effect.

The SIF DMA Timeout (SDT) bit 1010 indicates that the SIF DMA timer has timed-out. SIF DMA has been acitve for an excessive time indicating a system failure. The SDT interrupt bit is cleared by writing a one to it, writing a zero has no effect.

The RX FIFO Over-run (RFO) bit 1012 indicates that the FPA Receive FIFO has over-run. This error should not occur with production pico-code and should be regarded as an Adapter check error. The RFO interrupt bit is cleared by writing a one to it, writing a zero has no effect.

The other ten bits of the FIP register are reserved bits.

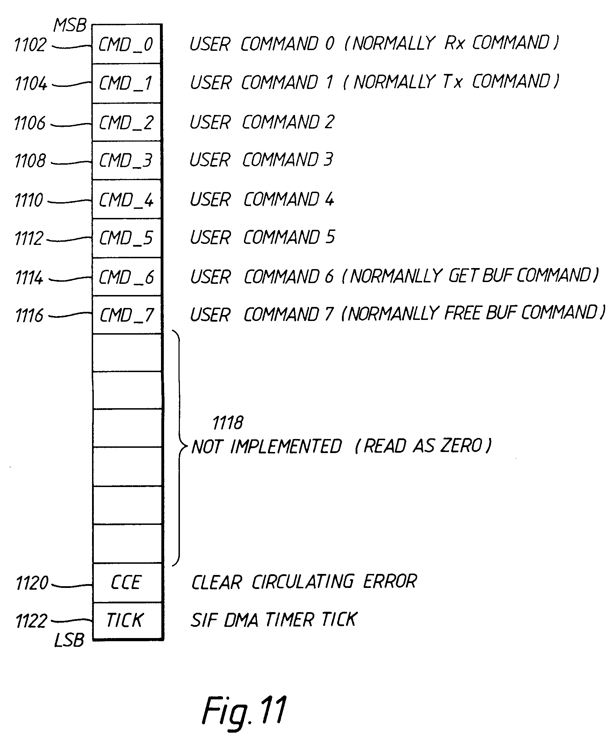

The FPA command register is indicated as FMCD @ 01.0224 in Figure 8. The FCMD register controls the activation of microcontroller "User" tasks. It also provides indication of their status (Active or Complete). The eight user command bits in this register, shown in Figure 11, correspond directly to eight User command $\mu$code Entry Points. As such they are totally generic and have no implied functionality. They include command bits 1102 to 1116 and 6 not unimplemented bits 1118 which are read as zero.

Setting a command bit causes the microcontroller Entry Point and Scheduler to schedule $\mu$code execution at the corresponding Entry Point. $\mu$code execution will begin as soon as current $\mu$code execution completes if there is no higher priority task waiting. Command bits are prioritized : User Cmd 0, 1102 has higher priority than User Cmd 7, 1116.

Command bits are only cleared by μcode, or at reset. Once a command bit is set the CPU must wait until it is cleared by the μcode, before it can be reissued.

The Clear Circulating Error (CCE) bit 1120 clears a circulating error condition detected by the Rx Stats S.M. when a one is written to the bit. The FIP register CED bit indicates that a circulating error has occured. Writing a zero to this bit has no effect.

The SIF DMA timer tick (TICK) bit 1122 allows the FPA to maintain a SIF DMA timer to detect excessive DMA time that is independant of the adapter bus clock frequency. Instead of using the bus clock as a reference for the timer, writes of one to this bit are used instead. This allows the adapter general purpose timer to be used (by software) as the basic time reference.

Whenever the FPA initiates SIF DMA it initializes a counter to a value of 1000. Whenever a one is written to this bit the counter is decremented by one. If the counter is ever decremented to zero (and the FPA is waiting for SIF DMA to complete) a SIF DMA timeout condition has occured and the SDT bit in the FIP register is set. Normally the adapter CPU would write a one to the TICK bit every 10mS (the standard code timebase), resulting in a SIF DMA timeout of 10 seconds.

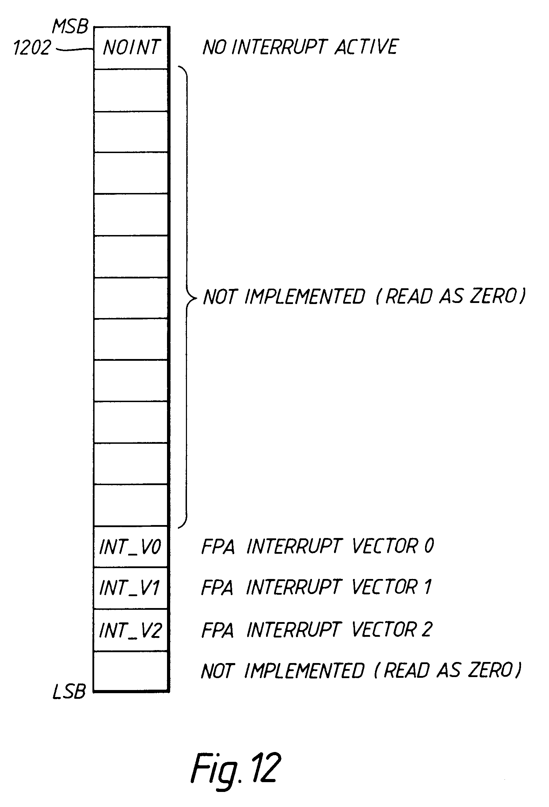

The FPA Interrupt Vector register is indicated as FINT @ 01.0226 in Figure 8. The FINT register shown in more detail in figure 12, allows command interrupts to be read and cleared. The register provides an encoded indication of the highest priority active interrupt. Reading the register both presents a vector indicating the highest priority interrupt active, and clears that interrupt flag. Writing to the register has no effect. The interrupt vector is positioned in the register such that it can be used as a word index. The M.S. bit 1202 of the register NOINT will be read as a one if no command interrupts are active.

Command interrupt 0 has the highest priority, and command interrupt 7 has the lowest priority. If command interupt 0 is active the FINT register will be read as 0x0000, if 7 then 0x000E will be read. If no interrupts are active the FINT register will be read as 0x8000.

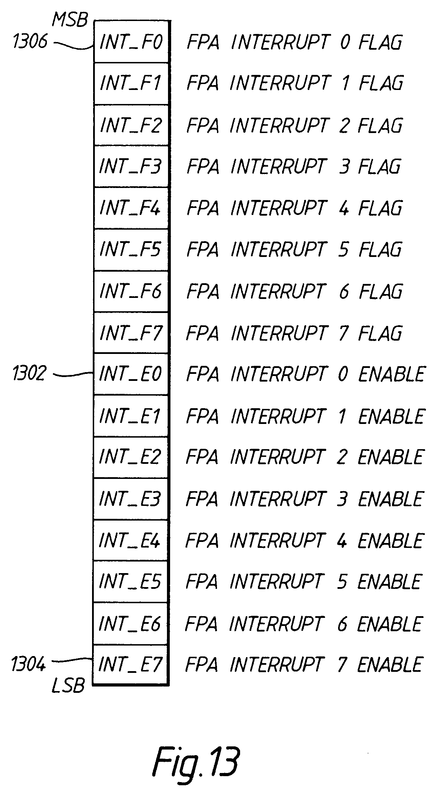

The FPA interrupt mask register is indicated as FMASK @ 01.0228 in Figure 8. The FMASK register allows the CPU to read the command interrupt flag states and to enable the setting of individual interrupt flags. The register is shown in detail in figure 13.

The LS bit of the register contains enable bits INT__E0 (1302) to INT__E7 (1304). These allow the CPU to enable the setting of the corresponding command interrupt flags. If the enable bit is set, the corresponding interrupt flag bit can be set. If it is not set, the corresponding interrupt flag bit cannot be set. Clearing the enable bit for a particular interrupt bit has no effect on a pending interrupt, the interrupt can only be cleared by reading the INTVEC register. All enable bits are cleared at reset. In other words, if INT__E0 (1302) is set, the INT__F0 (1306) can be set.

The MS bit of the register allows the CPU to read the current contents of the command interrupt flags. Writing to the MS byte has no effect.

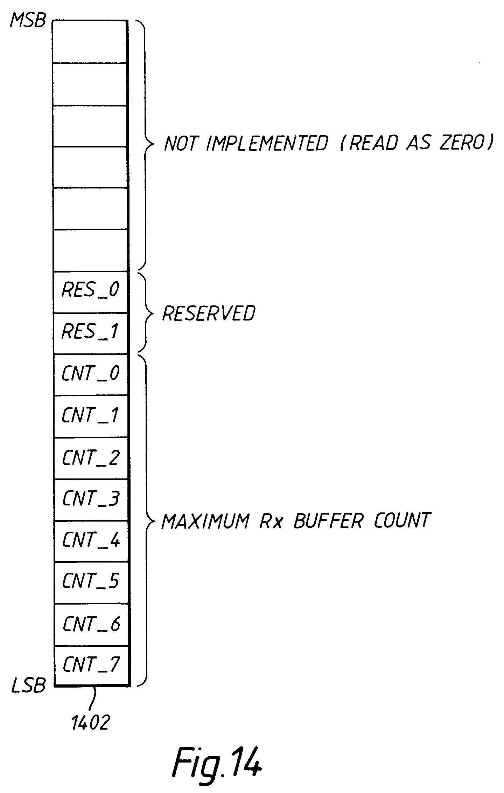

The FPA length control register is indicated as FRLEN @ 01.022E in figure 8. The FRLEN register shown in detail in figure 14, limits the length of Rx frames processed by the FPA to a maximum number of adapter data buffers. This prevents the possiblity of very large network frames (caused by network errors) reaching the host.

The L.S. byte of the register 1402 should be loaded with the number indicating the minimum number of buffers consumed by a frame to ensure that the frame is illegal. For instance the maximum 16 Mbit/s Token ring frame size is 17990 bytes, so for 1K byte buffers the register should be set to 18. The 8-bit granuality of this register allows buffer sizes as small as 128 bytes to be used with 16 Mbit/s Token-ring.

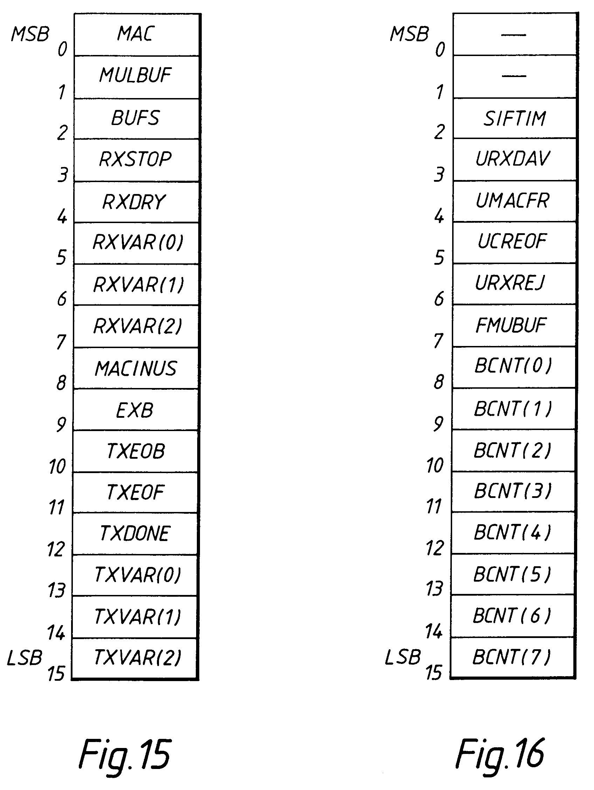

The FPA internal variable test register V is indicated as VREG@ 01.022C in Figure 8. This is a read-only register, shown in detail in Figure 15, that makes certain internal variables of the FPA observable for manufacturing test. The contents of the register have previously been identified earlier in the description.

The FPA internal variable test register X is indicated as XREG @ 01.022E in Figure 8. This register is a read-only register, shown in more detail in Figure 16, that makes the FPA buffer counter decrementer and other internal signals, observable for manufacturing test.

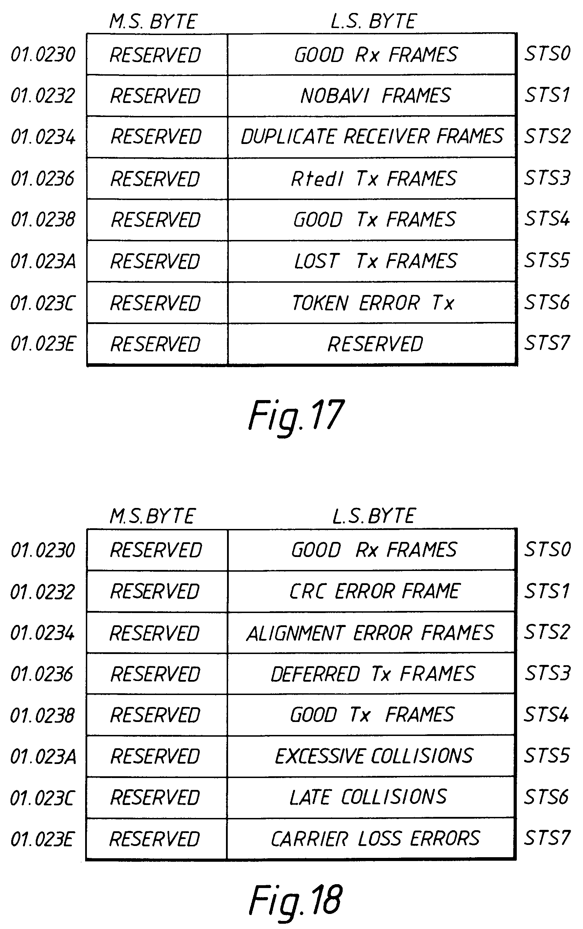

The statistics registers STS0-STS7 in Figure 8, gather frame error information reported by the PH. Each register contains a single byte-long error counter. The actual errors counted depend on the network type: Token-Ring or Ethernet. The names and location of the different error counters are shown in Figure 17 for Token-Ring and Figure 18 for Ethernet.

Reading a statistics register clears its contents, after the read. The reserved M.S. byte of each register will always be read as zero. Writing to a statistics register has no effect.

The MSBs of all the error counters are ORed together to create the Statistics Overflow (SO) interrupt request in the SEADs IPR register. As more than one counter may have overflowed, all the statistics registers should be read on an SO interrupt.

It should be noted that reserved registers will always be written as a zero and reading them will always return a zero.

The error counter of the Token-Ring network types include the following error counters.

Frames receved by the PH without errors into adapter buffers are counted by the GOOD RX Frames Counter. This counter may not correspond to the number of frames received by the host, if the adapter or host is congested. It gives a count of the frames received with a PH receive completion code (rcc) of 0X00.

The NOBAVI frames counter measures number of frames which were aborted due to insufficient frame buffers. In other words, the frames received with a PH receive completion code (rcc) of 11XX.

The Duplicate Receiver frames counter measures frames illegally received by an upstream station. In order to increment this counter, the following conditions must be met:

The frame must be specifically addressed;

If source-routed the frame must contain a specific route;

The frame must be received with a PH receive completion code (rcc) of 0x00;

The incoming A bits (as reported in PH Rx status) must both be set;

The local frame error detect bit (LFED in PH Rx status) must not be set; and

The frame must be internally matched (as reported in PH Rx status).

The Rtedl frames counter measures transmitted frames that when stripped, were found to have the EDI (error detected indicator) set.

The Good Tx frames counter measures frames transmitted by the PH without error. These frames are transmitted with a PH transmit completion code (tcc) of 0X00.

The Lost Tx frames counter measures frames transmitted by the PH that failed to be stripped from the ring correctly. These counter measures are transmitted with a PH transmit completion code (tcc) of 0X10.

When using an Ethernet protocol the following error counters are utilised.

The Good Rx frames counter measures the frames received by the PH without errors into adapter buffers. This counter may not correspond to the number of frames received by the host, if the adapter or host is congested. Note that frames with dribble (alignment) errors, but valid CRC are considered to be good frames. These frames are received with a PH receive completion code (rcc) of 0X01.

The CRC error frames counter measures the frames received from the network that had CRC errors. These frames are received with a PH receive completion code (rcc) of 0X10.

The Alignment Error frames counter measures the frames received from the network that had both dribble and CRC errors. These frames are received with a PH receive completion code (rcc) 0X11.

The Deferred Tx frames counter measures frames that on their initial attempt at transmission had to defer to prior network traffic. The defer bit reported in PH Tx status is thus set.

The Good Tx frames counter measures frames transmitted by the PH without error. These frames are transmitted with a PH transmit completion code (tcc) of 0X00.

The excessive collisions counter measures frames transmitted by the PH that failed to gain access to the network in 16 attempts. These frames are transmitted with a PH transmit completion code (tcc) of 0X01.

The Late Collisions counter measures frames interrupted by a collision after the network slot-time. These frames are transmitted with a PH transmit completion code (tcc) of 0X10.

The Carrier Loss Errors counter measures frames being sent by the adapter for which receive carrier was not detected after a slot-time from the start of transmission. Carrier must be present continuously from this point until the end of transmission to prevent an error being logged. These frames are transmitted with a PH transmit completion code (tcc) of 0X11.

As previously indicated, the register map is different during reset than in non-reset operation. The register map during reset is shown in Figure 19.

During reset (i.e. whilst the NRST bit in FCTL is not set), the FPA control store RAM is accessable in the FPA register map. The control store RAM is organised as five 1024x16 RAMs, accessed in parallel to provide 1024 80 bit words. The 5 individual RAMs can be accessed individually to allow microcode loading and verification.

The FPA RAM(s) are addressed indirectly, through the RAMADR register 1902. This register holds the ROW address of the RAM (equivalent to microcontroller state). The separate RAMs that make up an 80 bit word are accessed individually at locations RAM1 1904 through RAM5 1912. Writing to FPA register location RAMWR 1914 allows all five RAMs to be loaded simultaneously with the same data. This provides a quick method of RAM initialization or pattern testing.

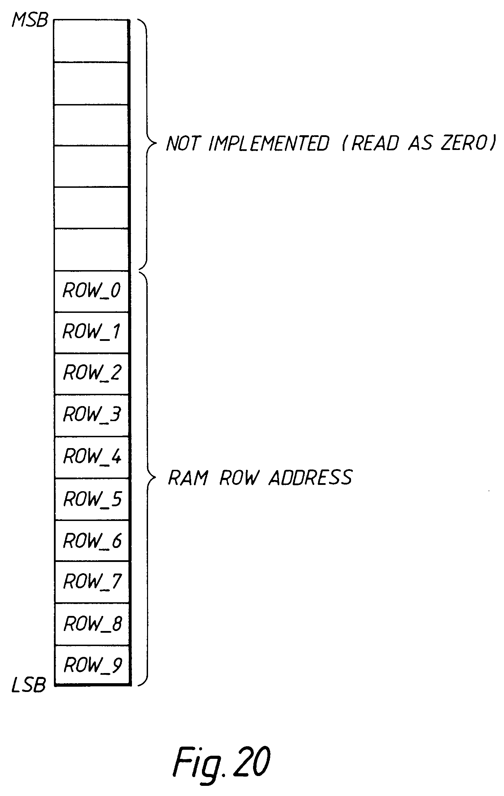

The FPA RAM address register is used to address the microcontroller control store RAM for initialization and verification. The register holds the RAM row address that will be used when the RAM R/W registers are accessed as is shown in Figure 20.

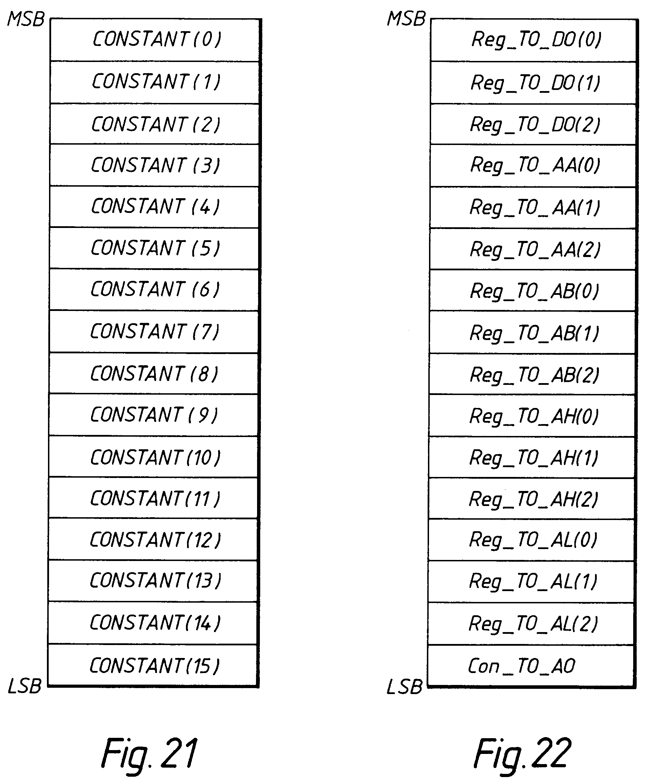

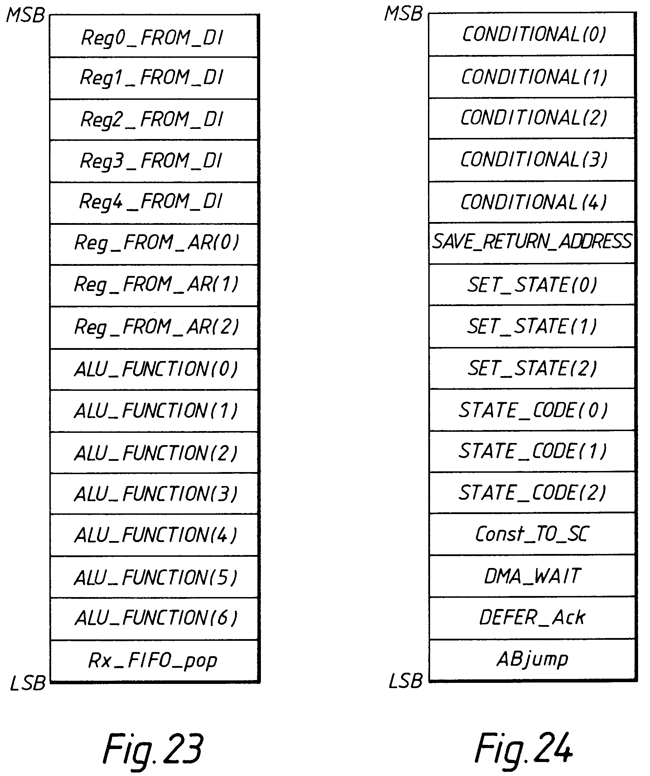

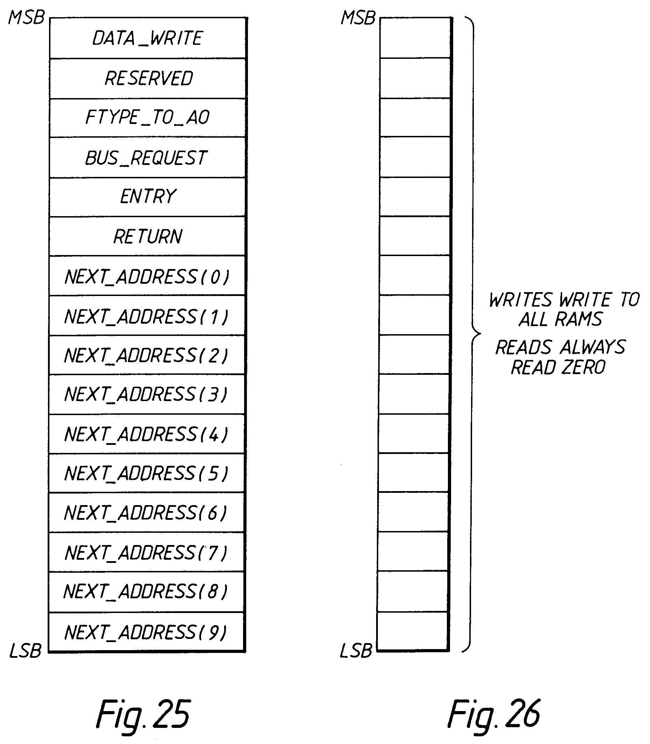

The bit map of each of the five RAM registers are shown in Figures 21 to 25 whilst the RAM W/R register bit map is shown in Figure 26. The contents of each bit map are self explanatory to the skilled man and will not be described in further detail at this stage.

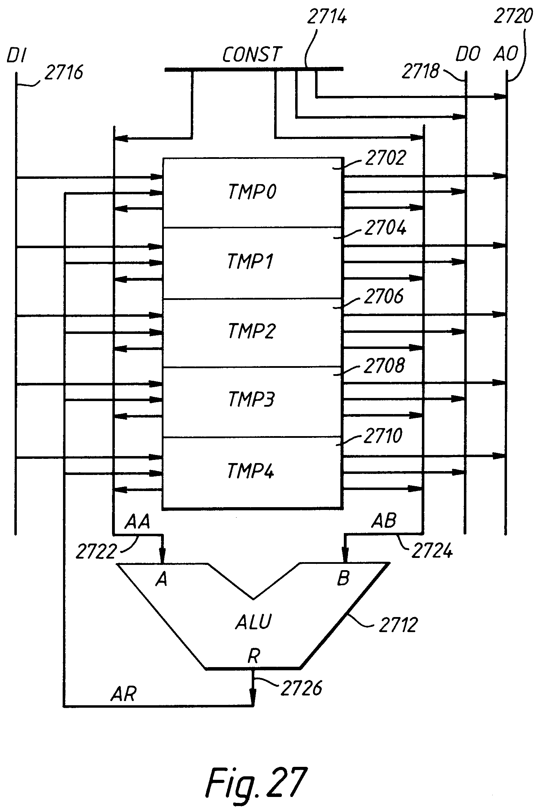

Referring to figure 27, which descibes the microcontroller datapath, the CONST ($\mu$code Constant) data bus 2714 carries a 16 bit value stored in the Control store for every $\mu$code state. This constant value can be used as an ALU operand, or to form the address or data of an adapter bus cycle.

The DI (Data In) data bus 2716 carries data read from the adapter bus on FPA bus master read cycles. The DI bus is 16 bits wide. In some applications, this bus could be combined with the DO bus.

The DO (Data Out) data bus 2718 carries data to the adapter bus for FPA bus master write cycles. The DI bus is 16 bits wide.

The AO (Address Out) data bus 2720 carries an address to the adapter bus for FPA bus master cycles. The AO bus is 20 bits wide and represents a word (16 bit) Address. There is no provision for byte addressing. This bus allows wire-ORing of inputs from different sources to allow offset addresses to be generated.

The AA (ALU A) data bus 2722 carries operand data to the A-port of the ALU; the AB (ALU B) data bus 2724 carries operand data to the B-port of the ALU; and the AR (ALU R) data bus 2726 carries the result of an ALU operation from the ALU R-port.

Five general purpose registers TMP0 2702 through TMP4 2710 are used to store values read from the adapter bus, and as operands of ALU operations. They can be written from the DI or AR buses and can drive the AA, AB, DO or AO buses. The 20-bit AO bus can be driven in one of two different ways: AL - As a word (16 bit) address, or AH - as a page (1Kbyte) address. These two addressing modes can be used in conjunction with CONST addressing to provide table or indexed addressing.

The datapath ALU provides a simple set of arithmetic and logical operations. ALU operations supported include: ADD, SUB, ADD, INC, DEC byte swapping and bit/byte swapping. Value testing (For $\mu$jumps) takes place on the AB (ALU B) bus.

The Entry Point and Scheduler control the scheduling of $\mu$code tasks and the generation of state addresses. The Scheduler prioritizes the various tasks and selects the appropriate Entry Point address. Task state latches store task information used to direct scheduling and Entry point generation.

The Scheduler prioritizes the tasks that require execution by microcontroller. Tasks are prioritized in this order:

    0) PH__RX task

    1) PH__TX task

    2) User Commands (in priority order - CMD__0 has highest priority)

    3) SIF tasks

The SIF tasks (SIF__RX, SIF__TX and SIF__US) are prioritized in a Round-Robin manner to ensure fair access. The Scheduler maintains latches to indicate which SIF task is currently active, and uses this as the basis for prioritizing which should become active next.

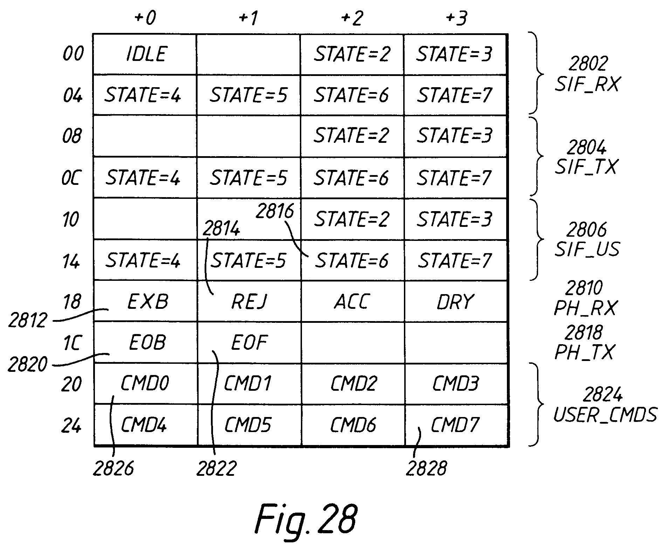

The Entry point logic creates state addresses in the range 0x00-0x27, the allocation of these addresses to tasks is shown in Figure 28.

Addresses 0x00-0x17 2802, 2804, 2806 are allocated to the SIF tasks. Each task has eight Entry points which correspond to the eight possible values that can be stored in their task state latches.

Task state latch values of zero or one indicate an idle state, and cause the task to not take part in the Round-Robin and overall prioritization schemes. All other state values are capable of causing Entry Points.

The zero Entry Point address is used as the default Entry Point when no task requires execution. There is no conflict with the SIF__RX task as it corresponds to an idle state.

Address 0x18-0x1B 2810 are allocated to the PH__RX task. These Entry Points are determined by various hardware conditions. If the RX statistics S.M. indicates RXDRY && RXSTOP the DRY entry point is used.

This is an indication that the PH receiver has stopped although there are buffers on the receive queue. This is because the PH_RX microcode added these buffers to the queue just alter the PH read a zero list forward pointer. If the $\mu$code saves the address of the last buffers written to the tail of the queue, it can quickly restore PH reception from this entry point.

Unfortunately, things may be more complicated than this. RXDRY is an indication from the RX statistics S.M. that the PH has read a zero forward pointer, RXSTOP is an indication from the RX statistics S.M. that the PH has actualy stopped. RXSTOP does not necessarily follow RXDRY as buffer recovery by the PH can cause it to re-read a valid length. The $\mu$code must not save the page number of buffers added to the queue if RXDRY is already set. Should there be no network traffic for a length of time after the PH reads a zero forward pointer, it may be a while before the PH actually stops. During this time, a number of individual

24

buffers may be added to the receive queue, but the identity of the last buffer added before RXDRY became set must be retained. This is assured by the μcode conditionally testing for RXDRY and only updating the saved buffer location if RXDRY is not set.

EXB 2812 is the Rx Statistics S.M. indicates $\overline{RXDRY}$ && RXSTOP and the MACINUS latch is not set the EXB entry point is used.

The REJECT 2814 entry point has lower priority than DRY or EXB. If there is data from the Rx Statistics S.M. in the FIFO and this data indicates REJECT this entry point is used.

The ACCEPT 2816 entry point has lower priority than DRY or EXB. If there is data from the Rx Statistics S.M. in the FIFO and this data indicates ACCEPT this entry point is used.

Addresses 0x1C-0x1F are allocated to the PH-TX 2818 task. These Entry Points are determined by various hardware conditions:

If the Tx Statistics S.M. detects an End_Of_Buffer EOB 2820 condition (PH clearing the Buffer STS field) for Tx, the EOB Entry Point is scheduled.

If the Tx Statistics S.M. detects an End_Of_Frame EOF 2822 condition (PH writes the Buffer STS field with the EOF bit set) for Tx the EOF Entry Point is scheduled.

Addressed 0x20-0x27 2824 are allocated to user commands initiated from the command register. Entry Points are allocated on a one to one basis to corresponding Command bits, i.e. CMD_0 bit creates CMD0 Entry Point 2826, CMD_7 CMD7 Entry Point 2828, etc.

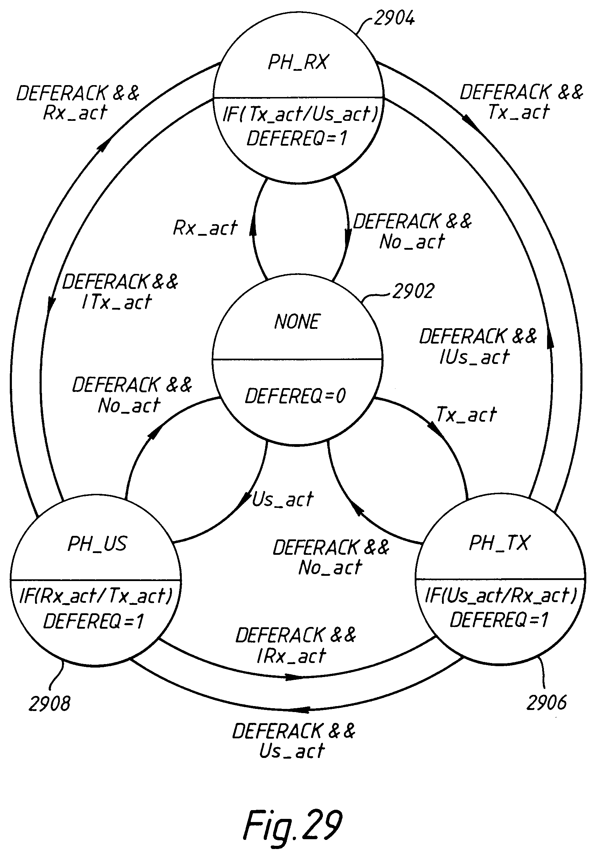

The Round-Robin prioritizer allows fair allocation of FPA run-time to the various SIF tasks. This is shown in figure 29. The timing of the transfer of execution between the tasks is a μcode decision, while the choice of task is made by hardware.

The Scheduler maintains a set of latches in which it records the current active SIF tasks (i.e. which task should run if no other higher task is waiting). This latch has four legal values:

0) None - No SIF task is in an active state, 2902

1) SIF_RX, 2904

2) SIF_TX, 2906

3) SIF_US, 2908

The Scheduler continuously monitors this state and the state of the task state latches to determine if a change of active task state is required. Should the current state indicate no task is active and one of the tasks suddenly becomes active, then that task will immediately become the active task. A task becomes active when its task state latches are loaded with a non-idle by μcode. As only one set of state latches can be written at a time, two tasks cannot become active simultaneously, so no conflict is possible.

Once a task has become active, the active state latches can only be altered under μcode control. A dedicated μcode conditional branch condition DEFEREQ allows -code to test if there is another task waiting to run. DEFEREQ is actually a signal from the Scheduler that indicates at least one of the other tasks is in a non-idle state. The active task can transfer execution to this task by asserting the DEFERACK μcode output. If there is only one other task in the non-idle state, that task becomes the active task. If there are two other non-idle tasks (i.e. all three tasks are active), then execution is passed around in turn:

SIF_RX-->SIF_TX-->SIF_US-->SIF_RX

This is all illustrated by Figure 29, in which the following abbreviations have been used:

Rx_act 2910 : A non-idle (>1) PH_RX state

Tx_act 2912: Anon-idle (>1) PH_TX state

Us_act 2914 : A non-idle (>1) PH_US state

Non_act : All SIF task states are idle

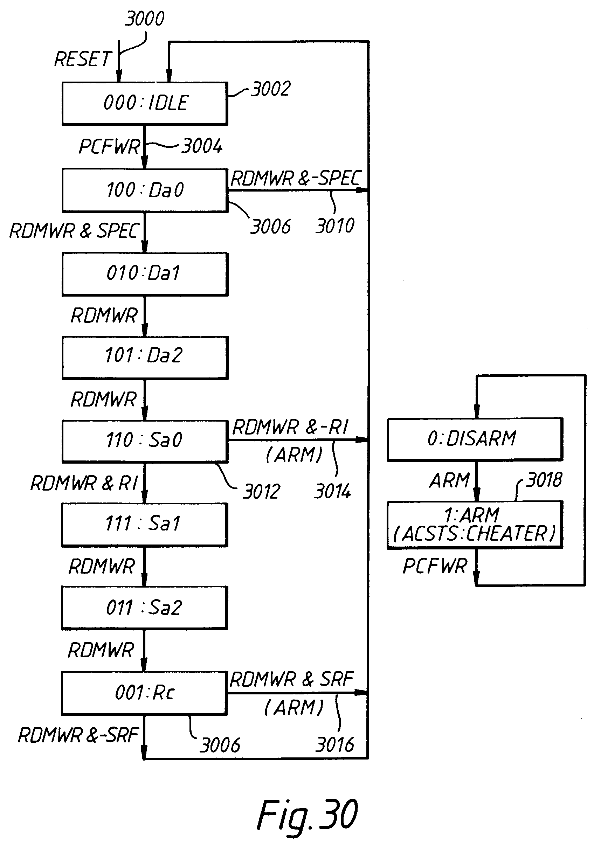

The Rx Dupadr S.M. is implemented as semi-random logic, rather than a PLA. This S.M. is shown in Figure 30. The data sequencer is implemented as a three bit pseudo-random counter and control logic. A separate Set/Reset latch enables A and C bit checking based on the results of the data sequencer.

The pseudo-random counter has two controls: CLEAR, START and INCREMENT. In addition, it creates an output ARM that sets the ARM latch.

| Term | Inputs | Outputs |
|------|--------|---------|
| 3000 | RESET I RDMWRT | INCREMENT; |
| 3002 | RESET I PCFWRT | CLEAR1; |
| 3004 | PCFWR & -RESET | START; |
| 3006 | 001 | CLEAR2; |
| 3008/3010 | 100 &-SPEC | CLEAR3; |
| 3012/3014 | 110 & -RI | ARM;CLEAR4; |
| 3006/3016 | 001 & SRF | ARM; |

The arm latch indicates that frame is being received that could contain a cheater error 3018. The latch is set by the ARM signal 3014/3016 from the data sequencer, and cleared by PCFWR 3004 (which indicates start of a new frame).

A cheater error 3018 (Duplicate Address) error is recorded if the ARM latch is set and a Receive status write cycle occurs with the following data:

0) EOF bit set

1) INMATCH bit set

2) Rcc(0-3) = 0X00

3) LFED bit not set

4) PCFE A and C bits sets

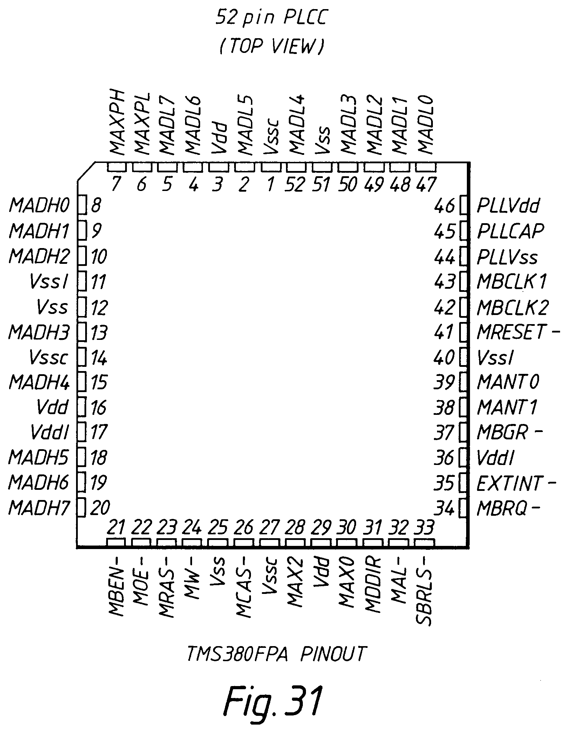

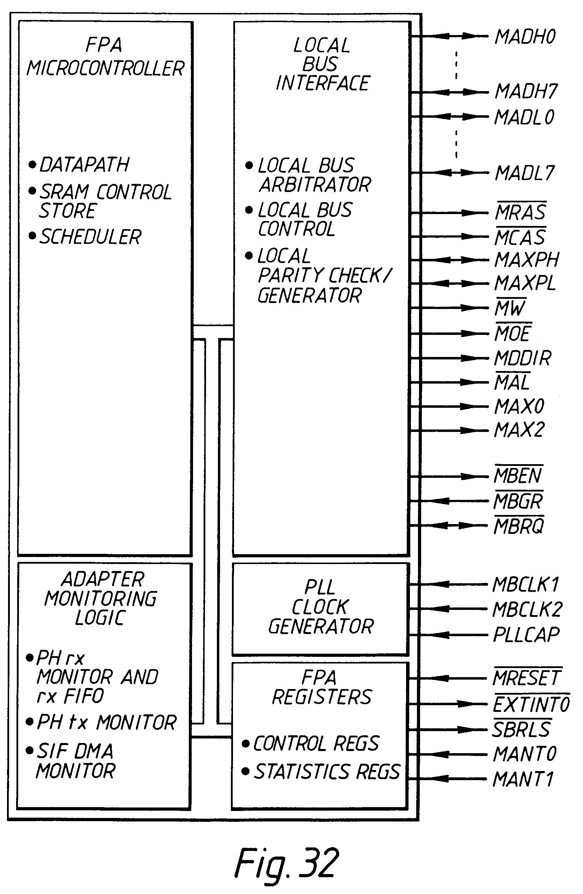

The pin assignments for the auxiliary processor (52-pin PLCC) are shown in Figure 31, whilst Figure 32 shows a block diagram of the same device.

When connecting the auxillary processor to the main processor pins with like names names should be connected.

The FPA MANT0 and MANT1 pins are used to select the manufacturing test modes. Normally, these pins will be held high by the built in pull-ups. Options are encoded on these pins as follows:

MANT0 = 0; MANT1 = 0; Unit in place mode places the FPA in its "Unit in place" test mode. In this mode, all pins are tristated.

MANT0 = 0; MANT1 = 1; MADL0 = 0; Scanpath Self Exercise mode causes the FPA to shift a pseudo-random bit pattern through its SRL scan chain. This provides a high level of internal node-toggling for life-testing or device burn-in. Scan path data (the pseudo-random bit pattern) will appear as an output on $\overline{SBRLS}$.

MANT0 = 0; MANT1 = 1; MADL0 = 1; Scanpath Shift mode causes the FPA to shift its SRL scan chain. Data is scanned in on $\overline{MBGR}$, and scanned out on $\overline{SBRLS}$.

MANT0 = 1; MANT1 = 0; Scanpath Hold mode causes the FPA to not load (Evaluate) or shift its SRL scan chain. In this mode, the internal M-phase clocks of the FPA (M1-M8) are driven out on the MADL(0-7) bus pins. MADL0 carries clock M8, MADL1 M1, MADL2 and so on up to MADL7 carrying M7.

The details of the other pins are described in more detail below: MADH0 - MADH7 are local memory Address Data and Status Buses (high byte). For the first quarter of the local memory cycle these bus lines carry address bits AX4 and A0 to A6; for the second quarter, they carry status bits; and for the third and fourth quarters, they carry data bits 0 to 7. The most significant bit is MADH0 and the least significant bit is MADH7.

MADL0-MADL7 are local memory Address Data and Status Buses (low byte). For the first quarter of the local memory cycle these bus lines carry address bits A7 to A14; for the second quarter, they carry address bits; AX4 and A0 to A6; and for the third and fourth quarters, they carry data bits 8 to 15. The most significant bit is MADL0 and the least significant bit is MADL7.

$\overline{MAL}$ is a Memory Address Latch. This is a strobe signal for sampling the address at the start of the memory cycle; it is used by SRAMs and EPROMs. The full 20-bit word address is valid on MAX0, MAXPH, MAX2, MAXPL, MADH0-MADH7 and MADL0-MADL7. Three 8-bit transparent latches can therefore be used to retain a 20-bit static address throughout the cycle.

If there is a rising edge, there is no signal latching and if there is a latching edge, the above mentioned address signals are allowed to be latched.

MAX0 is a local Memory Extended Address Bit. This signal drives AX0 at ROW address time (which can be latched by $\overline{MRAS}$) and normally it drives A12 at COL address and DATA time for all cycles. However, if the FPA DEBUG mode is enabled, then A12 is replaced by an extended status bit.

MAX2 is a local Memory Extended Address Bit. This signal drives AX2 at ROW address time (which can be latched by $\overline{MRAS}$) and normally A14 at COL address and DATA time for all cycles. However, if the FPA DEBUG mode is enabled, then A12 is replaced by an extended status bit.

26

MAXPH is a local Memory Extended Address and Parity High Byte. For the first quarter of a memory cycle, this signal carries the extended address bit (AX1); for the second quarter of a memory cycle, this signal carries the extended address bit (AX0); and for the last half of the memory cycle, this signal carries the parity bit for the high data byte.

MAXPL is a local Memory Extended Address and Parity Low Byte. For the first quarter of a memory cycle, this signal carries the extended address bit (AX3); for the second quarter of a memory cycle, this signal carries extended address bit (AX2); and for the last half of the memory cycle, this signal carries the parity for the low data byte

$\overline{\text{MBEN}}$ is a buffer enable signal which enables the bidirectional buffer outputs on the MADH, MAXPH, MAXPL and MADL buses during the data phase. This signal is used in conjunction with MDDIR which selects the buffer output direction.

$\overline{\text{MBGR}}$ is a local bus grant signal which indicates that the FPA has been granted access to the adapter local memory bus.

$\overline{\text{MBRQ}}$ is a local bus request signal used by the FPA to request bus master access to the adapter local memory bus. The FPA also monitors this signal to allow it to defer to other higher-priority bus requests.

$\overline{\text{MCAS}}$ is a Column Address Strobe for DRAMs. The column address is valid for the 3/16 of the memory cycle following the row address portion of the cycle. This signal is driven low every memory cycle while the column address is valid on MADL0-MADL7, MAXPH and MAXPL, except when one of the following conditions occurs:

1) When the address accessed is a TMS380Cx6 internal register (>01.0100->01.01FF).

2) When the address accessed is in the TMS380Cx6 external device address range (>01.0200->01.02FF). This address range includes the FPA registers.

MDDIR is a data direction signal used as a direction control for bidirectional bus drivers. The signal becomes valid before $\overline{\text{MBEN}}$ active. When the signal is high, an auxiliary processor memory bus write occurs and when the signal is low, auxiliary processor memory bus read occurs.

$\overline{\text{MOE}}$ is a memory output enable signal to enable the outputs of the DRAM memory during a read cycle. This signal is high for EPROM or BIA ROM read cycles. When this signal is high, DRAM output is disabled or when it is low, DRAM output is enabled.

$\overline{\text{MRAS}}$ is a Row Address Strobe for DRAMs. The row address lasts for the first 5/16 of the memory cycle. This signal is driven low every memory cycle while the row address is valid on MADL0-MADL7, MAXPH and MAXPL for both RAM and register access cycles.

$\overline{\text{MW}}$ is a local memory write signal used to specify a write cycle on the local memory bus. The data on the MADH0-MADH7 and MADL0-MADL7 buses is valid while $\overline{\text{MW}}$ is low. DRAMs latch data on the falling edge $\overline{\text{MW}}$, while SRAMs latch data on the rising edge of $\overline{\text{MW}}$. If $\overline{\text{MW}}$ is high, there is not a local memory write cycle and if $\overline{\text{MW}}$ is low, there is.

$\overline{\text{MRESET}}$ is a memory bus reset signal provided by the main processor. The $\overline{\text{SBRLS}}$ is a system bus release signal which provides control of the $\overline{\text{SBRLS}}$ pin of the main processor. If an implementation uses $\overline{\text{SBRLS}}$ then the FPA $\overline{\text{SBRLS}}$ output signal should be logically OR'ed with the host signal before it is applied to the TMS380Cx6 $\overline{\text{SBRLS}}$ input pin.

MBCLK1 and MBCKL2 are local bus clock 1 and 2 signals which are referenced for all local bus transfers. MBCKL2 lags MBCKL1 by a quarter of a cycle.

PLLCAP is a phase locked loop (PLL) tuning capacitor pin which may not be necessary, but space should be provided for a XR7 0.1 uF capacitor.

$V_{DDL}$ is a positive supply voltage for a digital logic and $V_{DD}$ is a positive supply voltage for output buffers. All $V_{DD}$ or $V_{DDL}$ pins must be attached to the common system power supply plane.

$PLLV_{DD}$ is a positive supply voltage for PLL. $PLLV_{DD}$ is isolated to a separate PLL power pad with ferrite bead separation from the common system power supply plane. Separate decoupling capacitors may be provided from $PLLV_{DD}$ to $PLLV_{SS}$.

$V_{SSC}$ is a ground reference (clean ground) for output buffers; $V_{SSL}$ is a ground reference for digital logic and $V_{SS}$ is ground connections for output buffers. All $V_{SS}$ pins must be attached to the common system ground plain.

$PLLV_{SS}$ is a ground reference to PLL which is attached to the common system ground plane.

The MANT0 and MANT1 signals that are not allowed to change dynamically and therefore have no timing associated with them. They should be strapped high or low as required.

Timing parameter symbols have been created in accordance with JEDEC standard 100. In order to shorten the symbols, some of the pin names and other related terminology have been abbreviated as shown below:

| DR | DRVR | RS | $\overline{SRESET}$ |
|---|---|---|---|
| DRN | $\overline{DRVR}$ | VDD | $V_{DDL}$, $V_{DDB}$ |
| OSC | OSCIN | | |
| SCK | SBCLK | | |

Lower case subscripts are defined as follows:

| c | cycle time | r | rise time |
|---|---|---|---|
| c | delay time | sk | skew |
| h | hold time | su | set-up time |
| w | pulse duration (width) | t | transition time |

The following additional letters and phrases are defined as follows:

| H | High | Z | | High impedance |
|---|---|---|---|---|
| L | Low | Falling edge | | No longer high |
| V | Valid | Falling edge | | No longer low |

**Claims**

1. A Local Area Network (LAN) adapter for connecting a host system to a Network providing an interface between the network and the host, including a main processor and an auxillary processor including operating means adapted to carry out a number of operations normally performed by the main processor, thereby increasing the frame transfer rate of the adapter.

2. An adapter according to claim 1, wherein the operating means comprise frame transfer management means for managing the transfer of frames to and from the host system.

3. An adapter according to claim 1 or claim 2, wherein the operating means comprises protocol handling management means for managing all protocol handling operations of the adapter.

4. An adapter according to any preceding claim, wherein the operating means comprises memory management means for managing the operation of buffers in the adapter.

5. An adapter according to any preceding claim , wherein all the operations of the auxillary processor occur in parallel during only one bus cycle of the main processor.

6. An adapter according to any preceding claim, wherein the auxillary processor includes a microcontroller in the form of a horizontally microcoded datapath in contact with a control store, means adapted to store customisable μcode for operating predetermined applications.

7. The adapter according to claim 6, wherein the control store means is a Read Access Memory (RAM).

8. The adapter according to claim 6, wherein the control store means is a Read only Memory (ROM).

9. An adapter according to any of claims 6 to 8, wherein the auxillary processor further includes
   a plurality of registers for temporarily holding data as it is transferred from one part of the auxillary processor to another;
   one or more state machines for storing data for use by the microcontroller;
   a memory for identifying certain parameters relating to frames, and informing the microcontroller of said parameters;
   an interface between the auxillary and main processors for allowing data passage between the two processors.

10. An adapter according to any preceding claim, in the form of an integrated circuit.

11. An adapter substantially as herein before described with reference to, and as illustrated in figures 2 to 32 of the accompanying drawings.

12. An auxillary processor for use in a Local Area Network (LAN) adapter, which adapter provides an interface between a network and a host and includes a main processor, wherein the auxillary processor includes operating means adapted to carry out a number of operations normally performed by the main processor, thereby increasing the frame transfer rate of the adapter.

13. An auxillary processor according to claim 12, wherein the operating means comprise frame transfer management means for managing the transfer of frames to and from the host.

14. An auxillary processor according to claim 12 or claim 13, wherein the operating means comprises protocol handling management means for managing the protocol handling operations of the adapter, in use.

15. An auxillary processor according to any one of claims 12 to 14, wherein the operating means comprises memory management means for managing the operation of buffers in the adapter, in use.

16. An auxillary processor according to any one of claims 12 to 15. further comprising a microcontroller having a horizontally microcoded datapath with a control store means adapted to store customisable microcode for operating predetermined applications, in use.

17. An auxillary processor according to claim 16, wherein the control store means is a Read Access Memory (RAM).

18. An auxillary processor according to any of claims 12 to 17, wherein the operations of the auxillary processor occur in parallel during on bus cycle of the main processor.

19. An auxillary processor substantially as herein before described with reference to and as illustrated in, figures 2 to 32, of the accompanying drawings.

Fig. 1

Fig. 2

EP 0 640 927 A1

Fig. 3

31

Fig. 4

402 — CONTROL STORE (SRAM) 1024 STATES 80 OUTPUTS

DATAPATH
REGISTER 0 — 416
REGISTER 1 — 420
REGISTER 2 — 422
REGISTER 3 — 424
REGISTER 4 — 426
— 428
ALU — 418

BUS MASTER SIGNALS
TO/FROM BUS I/F
ADDRESS (0:20)
DI (0:15)/DO (0:15)

CONTROL OUTPUT — 432

TASK STATE LATCHES — 412

ENTRY POINT AND SCHEDULER — 410, 411, 408
SCHEDULER INPUTS

CONDITIONAL UJUMP LOGIC — 414
UJUMP INPUTS

RETURN ADDRESS LATCH — 430, 406
Bamadr (0:9) — 404

UCODE LOAD I/F FROM CONTROL REGS

32

*Fig.5*

33

*606*

NOBUF

EOF_STS_WRITE              (PUSHFIFO;Eof)
EOF_STS_WRITE & BCNTZ      (PUSHFIFO;Eof;REJECT)

ZERO_STS_WRITE
(BUFS;Bcntld)

*602*
PCF_WRITE

*608*

BUFS

IPCF_WRITE                 (BUFS)
ZERO_STS_WRITE & BCNTZ     (PUSHFIFO;REJECT)
EOF_STS_WRITE              (PUSHFIFO;Eof)
EOF_STS_WRITE & BCNTZ      (PUSHFIFO;Eof;REJECT)

ZERO_STS_WRITE & IBCNTZ                 *604*
(PUSHFIFO;MULTIBUF;Bcntdec)

*610*

MULTIBUF

IPCF_WRITE                 (BUFS;MULTIBUF)
ZERO_STS_WRITE & BCNTZ     (PUSHFIFO;REJECT)
ZERO_STS_WRITE & IBCNTZ    (PUSHFIFO;Bcntdec)
EOF_STS_WRITE              (PUSHFIFO;Eof)
EOF_STS_WRITE & BCNTZ      (PUSHFIFO;Eof;REJECT)

PCF_WRITE

*Fig.6*

Fig. 7

| Address | Register | Mnemonic | Group |
|---|---|---|---|
| 01.0220 | FPA CONTROL REGISTER | FCTL | |
| 01.0222 | FPA INTERRUPT PENDING REGISTER | FIP | |
| 01.0224 | FPA COMMAND REGISTER | FCMD | |
| 01.0226 | FPA INTERRUPT VECTOR REGISTER | FINT | 800 FPA CONTROL REGISTERS |
| 01.0228 | FPA INTERRUPT MASK REGISTER | FMASK | |
| 01.022A | FPA Rx LENGTH CONTROL REGISTER | FRLEN | |
| 01.022 | INTERNAL TEST REGISTER : V | VREG | |
| 01.022E | INTERNAL TEST REGISTER : X | XREG | |
| 01.0230 | FPA STATISTICS REGISTER 0 | STS0 | |
| 01.0232 | FPA STATISTICS REGISTER 1 | STS1 | |
| 01.0234 | FPA STATISTICS REGISTER 2 | STS2 | |
| 01.0236 | FPA STATISTICS REGISTER 3 | STS3 | 802 FPA STATISTICS REGISTERS |
| 01.0238 | FPA STATISTICS REGISTER 4 | STS4 | |
| 01.023A | FPA STATISTICS REGISTER 5 | STS5 | |
| 01.023C | FPA STATISTICS REGISTER 6 | STS6 | |
| 01.023E | FPA STATISTICS REGISTER 7 | STS7 | |

Fig. 8

EP 0 640 927 A1

MSB

902 — NRST    NOT RESET

904 — SBRE    SBRLS - ENABLE

906 — XINTE    EXTINT - ENABLE

908 — MBRE    MBRQ - ENABLE

910 — PAR    DATA PARITY SELECT

912 — NET    NETWORK TYPE SELECT

914 — SWAP    ADDRESS SWAP SELECT

916 — DEBUG    DEBUG MODE SELECT

918 — PTST    PARITY TEST

920 — RTST    REGISTER TEST

922 — ROM    ROM ADDRESS MAP

RESERVED

RESERVED

RESERVED

RESERVED

RESERVED

LSB

Fig. 9

| | |
|---|---|
| MSB | |
| 1002 — PE | PARITY ERROR |
| 1004 — CI | COMMAND INTERRUPT |
| 1006 — SO | STATISTICS OVERFLOW |
| 1008 — CED | CIRCULATING ERROR DETECT |
| 1010 — SDT | SIF DMA TIMEOUT |
| 1012 — RFO | Rx FIFO OVER-RUN |
| | RESERVED |
| | RESERVED |
| | RESERVED |
| | RESERVED |
| | RESERVED |
| | RESERVED |
| | RESERVED |
| | RESERVED |
| LSB | RESERVED |

Fig.10

MSB

1102 — CMD_0     USER COMMAND 0 (NORMALLY Rx COMMAND)

1104 — CMD_1     USER COMMAND 1 (NORMALLY Tx COMMAND)

1106 — CMD_2     USER COMMAND 2

1108 — CMD_3     USER COMMAND 3

1110 — CMD_4     USER COMMAND 4

1112 — CMD_5     USER COMMAND 5

1114 — CMD_6     USER COMMAND 6 (NORMANLLY GET BUF COMMAND)

1116 — CMD_7     USER COMMAND 7 (NORMANLLY FREE BUF COMMAND)

1118
NOT IMPLEMENTED (READ AS ZERO)

1120 — CCE     CLEAR CIRCULATING ERROR

1122 — TICK     SIF DMA TIMER TICK

LSB

## Fig.11

MSB

1202 — NOINT     NO INTERRUPT ACTIVE

NOT IMPLEMENTED (READ AS ZERO)

INT_V0     FPA INTERRUPT VECTOR 0

INT_V1     FPA INTERRUPT VECTOR 1

INT_V2     FPA INTERRUPT VECTOR 2

           NOT IMPLEMENTED (READ AS ZERO)

LSB

*Fig. 12*

MSB

1306 — INT_F0 | FPA INTERRUPT 0 FLAG

INT_F1 | FPA INTERRUPT 1 FLAG

INT_F2 | FPA INTERRUPT 2 FLAG

INT_F3 | FPA INTERRUPT 3 FLAG

INT_F4 | FPA INTERRUPT 4 FLAG

INT_F5 | FPA INTERRUPT 5 FLAG

INT_F6 | FPA INTERRUPT 6 FLAG

INT_F7 | FPA INTERRUPT 7 FLAG

1302 — INT_E0 | FPA INTERRUPT 0 ENABLE

INT_E1 | FPA INTERRUPT 1 ENABLE

INT_E2 | FPA INTERRUPT 2 ENABLE

INT_E3 | FPA INTERRUPT 3 ENABLE

INT_E4 | FPA INTERRUPT 4 ENABLE

INT_E5 | FPA INTERRUPT 5 ENABLE

INT_E6 | FPA INTERRUPT 6 ENABLE

1304 — INT_E7 | FPA INTERRUPT 7 ENABLE

LSB

Fig.13

MSB

NOT IMPLEMENTED (READ AS ZERO)

RES_0

RES_1

RESERVED

CNT_0

CNT_1

CNT_2

CNT_3

CNT_4

MAXIMUM Rx BUFFER COUNT

CNT_5

CNT_6

CNT_7

LSB

1402

Fig.14

| MSB | | | MSB | |
|---|---|---|---|---|
| 0 | MAC | | 0 | — |
| 1 | MULBUF | | 1 | — |
| 2 | BUFS | | 2 | SIFTIM |
| 3 | RXSTOP | | 3 | URXDAV |
| 4 | RXDRY | | 4 | UMACFR |
| 5 | RXVAR(0) | | 5 | UCREOF |
| 6 | RXVAR(1) | | 6 | URXREJ |
| 7 | RXVAR(2) | | 7 | FMUBUF |
| 8 | MACINUS | | 8 | BCNT(0) |
| 9 | EXB | | 9 | BCNT(1) |
| 10 | TXEOB | | 10 | BCNT(2) |
| 11 | TXEOF | | 11 | BCNT(3) |
| 12 | TXDONE | | 12 | BCNT(4) |
| 13 | TXVAR(0) | | 13 | BCNT(5) |
| 14 | TXVAR(1) | | 14 | BCNT(6) |
| LSB 15 | TXVAR(2) | | LSB 15 | BCNT(7) |

*Fig.15*          *Fig.16*

|  | M.S. BYTE | L.S. BYTE |  |
|---|---|---|---|
| 01.0230 | RESERVED | GOOD Rx FRAMES | STS0 |
| 01.0232 | RESERVED | NOBAVI FRAMES | STS1 |
| 01.0234 | RESERVED | DUPLICATE RECEIVER FRAMES | STS2 |
| 01.0236 | RESERVED | Rtedl Tx FRAMES | STS3 |
| 01.0238 | RESERVED | GOOD Tx FRAMES | STS4 |
| 01.023A | RESERVED | LOST Tx FRAMES | STS5 |
| 01.023C | RESERVED | TOKEN ERROR Tx | STS6 |
| 01.023E | RESERVED | RESERVED | STS7 |

## Fig.17

|  | M.S.BYTE | L.S.BYTE |  |
|---|---|---|---|
| 01.0230 | RESERVED | GOOD Rx FRAMES | STS0 |
| 01.0232 | RESERVED | CRC ERROR FRAME | STS1 |
| 01.0234 | RESERVED | ALIGNMENT ERROR FRAMES | STS2 |
| 01.0236 | RESERVED | DEFERRED Tx FRAMES | STS3 |
| 01.0238 | RESERVED | GOOD Tx FRAMES | STS4 |
| 01.023A | RESERVED | EXCESSIVE COLLISIONS | STS5 |
| 01.023C | RESERVED | LATE COLLISIONS | STS6 |
| 01.023E | RESERVED | CARRIER LOSS ERRORS | STS7 |

## Fig.18

EP 0 640 927 A1

| Address | Register | Abbr. |
|---|---|---|
| 01.0220 | FPA CONTROL REGISTER | FCTL |
| 01.0222 | FPA INTERRUPT PENDING REGISTER | FIP |
| 01.0224 | FPA COMMAND REGISTER | FCMD |
| 01.0226 | FPA INTERRUPT VECTOR REGISTER | FINT |
| 01.0228 | FPA INTERRUPT MASK REGISTER | FMASK |
| 01.022A | FPA RAM ROW ADDRESS REGISTER | RAMADR |
| 01.022C | INTERNAL TEST REGISTER : V | VREG |
| 01.022E | INTERNAL TEST REGISTER : X | XREG |
| 01.0230 | FPA RAM 1 | RAM1 |
| 01.0232 | FPA RAM 2 | RAM2 |
| 01.0234 | FPA RAM 3 | RAM3 |
| 01.0236 | FPA RAM 4 | RAM4 |
| 01.0238 | FPA RAM 5 | RAM5 |
| 01.023A | FPA RAMWR | RAMWR |
| 01.023C | FPA STATISTICS REGISTER 6 | STS6 |
| 01.023E | FPA STATISTICS REGISTER 7 | STS7 |

1902

FPA RAM REGISTERS (IN BOLD)

*Fig.19*

Fig. 20

MSB

| CONSTANT (0) |
|---|
| CONSTANT (1) |
| CONSTANT (2) |
| CONSTANT (3) |
| CONSTANT (4) |
| CONSTANT (5) |
| CONSTANT (6) |
| CONSTANT (7) |
| CONSTANT (8) |
| CONSTANT (9) |
| CONSTANT (10) |
| CONSTANT (11) |
| CONSTANT (12) |
| CONSTANT (13) |
| CONSTANT (14) |
| CONSTANT (15) |

LSB

*Fig. 21*

MSB

| Reg_TO_DO(0) |
|---|
| Reg_TO_DO(1) |
| Reg_TO_DO(2) |
| Reg_TO_AA(0) |
| Reg_TO_AA(1) |
| Reg_TO_AA(2) |
| Reg_TO_AB(0) |
| Reg_TO_AB(1) |
| Reg_TO_AB(2) |
| Reg_TO_AH(0) |
| Reg_TO_AH(1) |
| Reg_TO_AH(2) |
| Reg_TO_AL(0) |
| Reg_TO_AL(1) |
| Reg_TO_AL(2) |
| Con_TO_A0 |

LSB

*Fig. 22*

MSB

| Reg0_FROM_DI |
|---|
| Reg1_FROM_DI |
| Reg2_FROM_DI |
| Reg3_FROM_DI |
| Reg4_FROM_DI |
| Reg_FROM_AR(0) |
| Reg_FROM_AR(1) |
| Reg_FROM_AR(2) |
| ALU_FUNCTION(0) |
| ALU_FUNCTION(1) |
| ALU_FUNCTION(2) |
| ALU_FUNCTION(3) |
| ALU_FUNCTION(4) |
| ALU_FUNCTION(5) |
| ALU_FUNCTION(6) |
| Rx_FIFO_pop |

LSB

## Fig.23

MSB

| CONDITIONAL(0) |
|---|
| CONDITIONAL(1) |
| CONDITIONAL(2) |
| CONDITIONAL(3) |
| CONDITIONAL(4) |
| SAVE_RETURN_ADDRESS |
| SET_STATE(0) |
| SET_STATE(1) |
| SET_STATE(2) |
| STATE_CODE(0) |
| STATE_CODE(1) |
| STATE_CODE(2) |
| Const_TO_SC |
| DMA_WAIT |
| DEFER_Ack |
| ABjump |

LSB

## Fig.24

MSB

| DATA _WRITE |
| RESERVED |
| FTYPE_TO_AO |
| BUS_REQUEST |
| ENTRY |
| RETURN |
| NEXT_ADDRESS(0) |
| NEXT_ADDRESS(1) |
| NEXT_ADDRESS(2) |
| NEXT_ADDRESS(3) |
| NEXT_ADDRESS(4) |
| NEXT_ADDRESS(5) |
| NEXT_ADDRESS(6) |
| NEXT_ADDRESS(7) |
| NEXT_ADDRESS(8) |
| NEXT_ADDRESS(9) |

LSB

*Fig. 25*

MSB

WRITES WRITE TO
ALL RAMS

READS ALWAYS
READ ZERO

LSB

*Fig. 26*

Fig. 27

| | +0 | +1 | +2 | +3 |
|---|---|---|---|---|
| 00 | IDLE | | | |
| 04 | STATE=4 | STATE=5 | STATE=2 | STATE=3 |
| 08 | | | STATE=6 | STATE=7 |
| 0C | STATE=4 | STATE=5 | STATE=2 | STATE=3 |
| 10 | | | STATE=6 | STATE=7 |
| 14 | STATE=4 | STATE=5 | STATE=2 | STATE=3 |
| 18 | EXB | REJ | ACC | DRY |
| 1C | EOB | EOF | | |
| 20 | CMD0 | CMD1 | CMD2 | CMD3 |
| 24 | CMD4 | CMD5 | CMD6 | CMD7 |

Labels: 2802 SIF_RX (rows 04–08); 2804 SIF_TX (rows 0C); 2806 SIF_US (rows 10–14); 2810 PH_RX; 2818 PH_TX; 2824 USER_CMDS (rows 20–24); 2812; 2814; 2816; 2820; 2822; 2826; 2828.

Fig. 28

Fig.29

Fig.30

52 pin PLCC
(TOP VIEW)

TMS380FPA PINOUT

Fig. 31

| FPA MICROCONTROLLER | LOCAL BUS INTERFACE |
|---|---|
| • DATAPATH | • LOCAL BUS ARBITRATOR |
| • SRAM CONTROL STORE | • LOCAL BUS CONTROL |
| • SCHEDULER | • LOCAL PARITY CHECK/ GENERATOR |

MADH0
MADH7
MADL0
MADL7
$\overline{MRAS}$
$\overline{MCAS}$
MAXPH
MAXPL
$\overline{MW}$
$\overline{MOE}$
MDDIR
$\overline{MAL}$
MAX0
MAX2
$\overline{MBEN}$
$\overline{MBGR}$
$\overline{MBRQ}$

| ADAPTER MONITORING LOGIC | PLL CLOCK GENERATOR |
|---|---|
| • PH rx MONITOR AND rx FIFO | |
| • PH tx MONITOR | FPA REGISTERS |
| • SIF DMA MONITOR | • CONTROL REGS |
| | • STATISTICS REGS |

MBCLK1
MBCLK2
PLLCAP
$\overline{MRESET}$
$\overline{EXTINT0}$
$\overline{SBRLS}$
MANT0
MANT1

Fig. 32

55

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 851 997 (TATARA)<br><br>* column 1, line 11 - column 2, line 13 *<br>* column 3, line 50 - column 4, line 41 *<br>* figures 1,3 *<br>--- | 1-3,<br>12-14 | G06F13/38<br>G06F13/12 |
| A | WO-A-87 07408 (AT&T)<br>* page 2, line 8 - page 3, line 26 *<br>* page 6, line 9 - page 8, line 15 *<br>* claims 1-4; figure 2 *<br>--- | 1-19 | |
| A | US-A-4 583 195 (DANIELS ET AL)<br>* column 5, line 10 - line 57 *<br>* claim 1; figure 2 *<br>----- | 1-19 | |
| | | | TECHNICAL FIELDS SEARCHED (Int.Cl.6)<br><br>G06F<br>H04L |

The present search report has been drawn up for all claims

| Place of search | Date of completion of the search | Examiner |
|---|---|---|
| THE HAGUE | 30 November 1994 | McDonagh, F |

EPO FORM 1503 03.82 (P04C01)